(19) Europäisches Patentamt
European Patent Office
Office européen des brevets

(11) **EP 3 717 283 B1**

(12) **EUROPÄISCHE PATENTSCHRIFT**

(45) Veröffentlichungstag und Bekanntmachung des Hinweises auf die Patenterteilung:
**10.11.2021 Patentblatt 2021/45**

(51) Int Cl.:
***B60C 11/24*** *(2006.01)* ***B60C 23/04*** *(2006.01)*
***B60C 23/06*** *(2006.01)*

(21) Anmeldenummer: **18811220.5**

(22) Anmeldetag: **27.11.2018**

(86) Internationale Anmeldenummer:
**PCT/EP2018/082705**

(87) Internationale Veröffentlichungsnummer:
**WO 2019/102036 (31.05.2019 Gazette 2019/22)**

(54) **VERFAHREN, STEUEREINRICHTUNG UND SYSTEM ZUM ERMITTELN EINER PROFILTIEFE EINES PROFILS EINES REIFENS**

METHOD, DEVICE AND SYSTEM FOR EVALUATING THE TREAD DEPTH OF A TIRE

MÉTHODE, DISPISITIF ET SYSTÈME D' ÉVALUATION DE LA PROFONDEUR DES SCULPTURES D'UN PNEUMATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2017 DE 102017221142**

(43) Veröffentlichungstag der Anmeldung:
**07.10.2020 Patentblatt 2020/41**

(73) Patentinhaber: **Continental Automotive GmbH 30165 Hannover (DE)**

(72) Erfinder:
• **KRETSCHMANN, Matthias 81737 München (DE)**
• **YOU, Shichao 81737 München (DE)**

(74) Vertreter: **Continental Corporation c/o Continental Automotive GmbH Intellectual Property Postfach 83 01 16 81701 München (DE)**

(56) Entgegenhaltungen:
**DE-A1- 10 058 099    DE-B3-102012 217 901**

**Beschreibung**

Die vorliegende Erfindung betrifft ein Verfahren zum Ermitteln einer Profiltiefe eines Profils eines Reifens während eines Betriebs eines den Reifen aufweisenden Fahrzeuges, eine Steuereinrichtung für ein Fahrzeug zum Ermitteln einer Profiltiefe eines Profils eines Reifens des Fahrzeuges und ein System für ein Fahrzeug, aufweisend eine derartige Steuereinrichtung und zumindest eine elektronische Radeinheit.

Aus der DE 10 2012 217 901 B3 ist ein Verfahren zum Ermitteln einer Profiltiefe eines Profils eines Reifens bekannt, das folgende Schritte aufweist:

- Ermitteln einer momentanen Drehgeschwindigkeit eines den Reifen aufweisenden Rades des Fahrzeuges basierend auf von zumindest einem ersten Sensor ermittelten Daten,

- Ermitteln einer momentanen Geschwindigkeit des Fahrzeuges basierend auf von zumindest einem, von dem zumindest einen ersten Sensor verschiedenen zweiten Sensor ermittelten Daten,

- Ermitteln eines momentanen dynamischen Radradius des den Reifen aufweisenden Rades basierend auf der ermittelten momentanen Drehgeschwindigkeit und der ermittelten momentanen Geschwindigkeit,

- Ermitteln zumindest eines ersten Betriebsparameters des Reifens, ausgewählt aus der Gruppe bestehend aus einer momentanen Reifentemperatur, einem momentanen Reifendruck und einer momentanen Reifenlast,

- Ermitteln eines momentanen dynamischen Innenradius des Rades basierend auf dem zumindest einen ermittelten ersten Betriebsparameter, wobei der Innenradius des Rades der Abstand zwischen der Radmitte und dem reifenseitigen Ansatz des Profils ist,

- Ermitteln einer Profiltiefe des Profils des Reifens basierend auf dem ermittelten momentanen dynamischen Radradius und dem ermittelten momentanen dynamischen Innenradius.

Aus dem Deutschen Dokument DE 100 58 099 A1 sind ein Verfahren und eine Vorrichtung zum Erkennen oder Abschätzen von Reifenabnutzung weiter offengelegt.

Es ist eine Aufgabe der vorliegenden Erfindung, die vorstehend erläuterte Ermittlung der Profiltiefe hinsichtlich der Genauigkeit des Ermittlungsergebnisses zu verbessern.

Ein erster Aspekt der Erfindung betrifft ein Verfahren zum Ermitteln einer Profiltiefe eines Profils eines Reifens während eines Betriebs eines den Reifen aufweisenden Fahrzeuges, wobei das Verfahren folgende Schritte aufweist:

- Ermitteln einer momentanen Drehgeschwindigkeit eines den Reifen aufweisenden Rades des Fahrzeuges basierend auf von zumindest einem ersten Sensor ermittelten Daten,

- Ermitteln einer momentanen Geschwindigkeit des Fahrzeuges basierend auf von zumindest einem, von dem zumindest einen ersten Sensor verschiedenen zweiten Sensor ermittelten Daten,

- Ermitteln eines momentanen dynamischen Radradius des den Reifen aufweisenden Rades basierend auf der ermittelten momentanen Drehgeschwindigkeit und der ermittelten momentanen Geschwindigkeit des Fahrzeuges,

- Ermitteln zumindest eines ersten Betriebsparameters des Reifens, ausgewählt aus der Gruppe bestehend aus einer momentanen Reifentemperatur, einem momentanen Reifendruck und einer momentanen Reifenlast,

- Ermitteln eines momentanen dynamischen Innenradius des Rades basierend auf dem zumindest einen ermittelten ersten Betriebsparameter, wobei der Innenradius des Rades der Abstand zwischen einer Radmitte und einem reifenseitigen Ansatz des Profils ist,

- Ermitteln einer Profiltiefe des Profils des Reifens basierend auf dem ermittelten momentanen dynamischen Radradius und dem ermittelten momentanen dynamischen Innenradius.

Bei dem Verfahren wird ferner wenigstens ein weiterer erster Betriebsparameter des Reifens, ausgewählt aus der Gruppe, bestehend aus einer momentanen Fahrbahnsteigung, einem momentanen Fahrzeugantriebsmodus und einer momentanen Reifenmaterialdehnung, ermittelt. Das Ermitteln des momentanen dynamischen Innenradius erfolgt ferner basierend auf dem wenigstens einen ermittelten weiteren ersten Betriebsparameter. Das Ermitteln des momentanen dynamischen Innenradius erfolgt somit gemäß dem genannten Aspekt der Erfindung basierend auf dem zumindest einen ermittelten ersten Betriebsparameter und dem wenigstens einen ermittelten weiteren ersten Betriebsparameter.

Der wenigstens eine weitere erste Betriebsparameter des Reifens kann dabei auch als "wenigstens ein weiterer Betriebsparameter" bezeichnet werden, d.h. hier und im Folgenden kann der Ausdruck "wenigstens ein weiterer erster Betriebsparameter" durch "wenigstens ein weiterer Betriebsparameter" ersetzt werden.

Es hat sich vorteilhafterweise herausgestellt, dass eine Mitberücksichtigung eines, bevorzugt wenigstens zweier, weiter bevorzugt sämtlicher der oben genannten weiteren ersten Betriebsparameter ("weiteren Betriebsparameter") im Rahmen des Verfahrens zum Ermitteln einer Profiltiefe in einfacher Weise eine Verbesserung der Genauigkeit des Ermittlungsergebnisses ermöglicht, wie im Folgenden näher erläutert wird.

Die momentane Fahrbahnsteigung kann insbesondere definiert sein als ein Winkel der Fahrbahn bezüglich der Horizontalebene, z. B. der in Fahrtrichtung betrachtete Anstiegswinkel (positiv oder negativ), oder als ein anderes, einen solchen Winkel repräsentierendes Maß (z. B. Tangens des Winkels oder dergleichen). Die Fahrbahnsteigung kann alternativ oder zusätzlich zu einem Maß des in Fahrtrichtung betrachteten Anstiegswinkels z. B. auch einen quer zur Fahrtrichtung (z. B. einer Querrichtung des Fahrzeuges) betrachteten Anstiegswinkel repräsentieren.

Der momentane Fahrzeugantriebsmodus ist relevant bei Fahrzeugen, bei denen ein von einer Antriebseinrichtung des Fahrzeuges in einem Antriebsstrang erzeugtes Antriebsmoment in unterschiedlichen Weisen (Antriebsmodi) auf die Räder des Fahrzeuges verteilt werden kann. Ein Beispiel ist ein Fahrzeug, bei dem das Antriebsmoment je nach Modus entweder nur auf die Räder einer Achse wirkt (z. B. Vorderräder oder Hinterräder), oder aber auf alle Achsen oder alle Räder (z. B. Vorderräder und Hinterräder). Ferner kann bei dem genannten Aspekt der Erfindung der Fahrzeugantriebsmodus auch z. B. bei einem Fahrzeug berücksichtigt werden, das gemäß eines so genannten "torque vectoring" ein Gesamtantriebsmoment in variabler Weise auf mehrere Räder verteilt (und z. B. für die Erfindung nutzbare "torque vectoring"-Daten bereitstellt).

Die momentane Reifenmaterialdehnung ist ein Parameter, der das momentane Ausmaß der reifenradiusvergrößernden Dehnung des Reifenmaterials repräsentiert. Dabei wird von der Überlegung ausgegangen, dass über die Lebensdauer eines Reifens betrachtet das Reifenmaterial sich durch betriebsbedingte Belastungen (vor allem Reifendruck und Fliehkräfte) irreversibel ausdehnt, was eine entsprechende Vergrößerung der Reifenradien (innen und außen) bedeutet. Die momentane Reifenmaterialdehnung kann im Rahmen der Erfindung insbesondere z. B. definiert bzw. quantifiziert sein als aufgrund des Effekts der Reifenmaterialdehnung momentan gegebener Zusatzbeitrag zu dem insgesamt sich ergebenden dynamischen Innenradius des Reifens.

Die momentane Fahrbahnsteigung besitzt großen Einfluss auf die dynamischen Radien des Reifens, insbesondere bei einer Fahrbahnsteigung in Fahrtrichtung betrachtet, also wenn das Fahrzeug bergab oder bergauf fährt. Beispielsweise benötigt ein bergauffahrendes Fahrzeug mehr Antriebsmoment im Antriebsstrang (gleichbedeutend mit mehr auf die Fahrbahn zu übertragender Antriebskraft) aufgrund einer entgegen der Fahrtrichtung wirkenden Komponente der Gravitationskraft, im Vergleich zu einem mit gleicher Geschwindigkeit auf einer ebenen Fahrbahn fahrenden Fahrzeug. Das erhöhte Antriebsmoment an der angetriebenen Achse bzw. den angetriebenen Rädern bewirkt einen höheren Schlupf an den betreffenden Rädern (z. B. den Vorderrädern bei Vorderradantrieb oder den Hinterrädern bei Hinterradantrieb). In diesem Fall besteht die Möglichkeit, dass der dynamische Radradius unterschätzt wird und demzufolge bei jedem betreffenden Rad auch die Profiltiefe unterschätzt wird.

In einer Ausführungsform, bei der als weiterer (erster) Betriebsparameter die momentane Fahrbahnsteigung ermittelt wird, werden im Falle einer Überschreitung eines vorbestimmten Fahrbahnsteigungsschwellwerts durch die ermittelte Fahrbahnsteigung Ergebnisse der momentan durchgeführten Ermittlungen als ungültig verworfen und/oder Ergebnisse darauf basierender Schritte des Verfahrens als ungültig verworfen.

Für in Fahrtrichtung betrachtete Anstiegswinkel können für Bergabfahrt und Bergauffahrt z. B. identische absolute Fahrbahnsteigungsschwellwerte verwendet werden.

Alternativ oder zusätzlich kann mit der momentanen Fahrbahnsteigung auch ein in Querrichtung des Fahrzeuges betrachteter Anstiegswinkel berücksichtigt werden, wobei auch in diesem Fall für eine Linksneigung und eine Rechtsneigung identische absolute Fahrbahnsteigungsschwellwerte vorgesehen werden können.

Durch ein solches Herausfiltern der unter ungünstigen Bedingungen ermittelten Ergebnisse wird die Genauigkeit bzw. Zuverlässigkeit der Profiltiefenermittlung in vorteilhafter Weise verbessert.

In einer Ausführungsform, bei der als weiterer (erster) Betriebsparameter die momentane Fahrbahnsteigung ermittelt wird, erfolgt bei dem Ermitteln des momentanen dynamischen Innenradius eine linear von der ermittelten momentanen Fahrbahnsteigung abhängige Korrektur.

Eine derartige lineare Korrektur ist einfach (z. B. mit geringem Rechenaufwand) durchzuführen und in der Praxis als solche oftmals bereits ausreichend, d. h. zusätzliche nicht-lineare Korrekturen können entfallen.

Bevorzugt wird eine additive Korrektur bei der Ermittlung des momentanen dynamischen Innenradius vorgenommen, also ein Zusatzbeitrag aufgrund Fahrbahnsteigung dem ohne Berücksichtigung der Fahrbahnsteigung ermittelten dynamischen Innenradius hinzuaddiert. Im Fall einer linearen Korrektur kann ein Zusatzbeitrag in folgender Form dargestellt werden:

$$r2_{dyn,SL} = C_{SL} \bullet SL$$

wobei bezeichnen:

$r2_{dyn,SL}$   Zusatzbeitrag zum dynamischen Innenradius,
$C_{SL}$   Koeffizient der linearen Korrektur,
$SL$   Fahrbahnsteigung.

Der Koeffizient $C_{SL}$ kann z. B. separat für jede Fahrzeugachse vorbestimmt und bei der Korrektur für die betreffenden Räder verwendet werden.

Die Korrektur ist vor allem von Bedeutung für den Fall einer mit positivem oder negativem Moment angetriebenen Achse, weil hierbei wie erwähnt eine von Null verschiedene Fahrbahnsteigung SL die Schlupfbedingungen verändert.

Wenn bei einer Bergabfahrt alle Räder gebremst werden, so sollte die Korrektur dementsprechend für alle Räder erfolgen.

In einer Weiterbildung wird der Koeffizient $C_{SL}$ für das betreffende Rad vorbestimmt in Abhängigkeit davon, an welcher von mehreren Achsen sich das Rad befindet und/oder in Abhängigkeit davon, ob das Rad momentan beschleunigend wirkt, bremst oder mitläuft.

In einer Ausführungsform wird die momentane Fahrbahnsteigung ermittelt basierend auf einer mittels eines Beschleunigungssensors des Fahrzeuges gemessenen Fahrzeugbeschleunigung und einer durch Auswertung wenigstens einer Drehgeschwindigkeit eines Rades des Fahrzeuges ermittelten Fahrzeuglängsbeschleunigung.

Die mittels des Beschleunigungssensors gemessene Fahrzeugbeschleunigung stellt bevorzugt die in allen drei Raumrichtungen gemessene vektorielle Fahrzeugbeschleunigung dar. Damit können im Folgenden Fahrbahnsteigungen sowohl in Fahrtrichtung betrachtet als auch in Querrichtung des Fahrzeuges betrachtet ermittelt werden.

Das Funktionsprinzip dieser Ausführungsform besteht darin, dass aufgrund der stets wirkenden Gravitation die Ergebnisse der beiden Fahrzeugbeschleunigungsmessungen sich voneinander unterscheiden, da die Gravitation nur das Ergebnis der mittels des Beschleunigungssensors gemessenen Beschleunigung beeinflusst, wobei aus der sich ergebenden vektoriellen Differenz der beiden Beschleunigungen sodann die Fahrbahnsteigung ermittelt, beispielsweise berechnet, werden kann.

In einer Ausführungsform, bei der als weiterer (erster) Betriebsparameter der momentane Fahrzeugantriebsmodus ermittelt wird, erfolgt bei dem Ermitteln des momentanen dynamischen Innenradius eine linear von einem in Abhängigkeit von dem ermittelten momentanen Fahrzeugantriebsmodus ermittelten Antriebsmoment abhängige Korrektur.

Der momentane Fahrzeugantriebsmodus kann hierbei z. B. aus ohnehin z. B. zu anderen Zwecken (z. B. für ein elektronisches Stabilitätsprogramm, ein "torque vectoring"-System, etc.) vorliegenden Fahrzeuginformationsdaten ermittelt werden.

Der momentane Fahrzeugantriebsmodus kann insbesondere z. B. für jedes Rad das momentan davon erbrachte positive oder negative Moment angeben.

Wenn z. B. bei dem Fahrzeug von einem Antriebsmodus auf einen anderen Antriebsmodus umgeschaltet wird, z. B. von einem reinen Heckantrieb oder Frontantrieb auf einen Allradantrieb, so führt dies zu einer neuen Verteilung der Antriebsmomente an den Rädern und daher zu neuen Schlupfbedingungen an den einzelnen Rädern. Demzufolge könnte bei einer Veränderung des Fahrzeugantriebsmodus ohne Berücksichtigung dieser Modusveränderung die Ermittlung des dynamischen Innenradius und demzufolge der Profiltiefe verfälscht werden.

Gemäß dieser Ausführungsform erfolgt eine Korrektur, zumindest umfassend einen linearen Anteil, der ähnlich wie für die Korrektur aufgrund der Fahrbahnsteigung bereits erläutert insbesondere als additiver Zusatzbeitrag aufgrund Fahrzeugantriebsmodus bzw. aufgrund erhöhtem/vermindertem Antriebsmoment an dem betreffenden Rad in folgender Form gebildet wird:

$$r2_{dyn,DT} = C_{Tq} \bullet Tq$$

wobei bezeichnen:

$r2_{dyn,DT}$     Zusatzbeitrag zum dynamischen Innenradius,

$C_{Tq}$     Koeffizient der linearen Korrektur,

$Tq$     individuelles Antriebsmoment.

Die Koeffizienten $C_{Tq}$ für jedes Rad können z. B. vorab festgelegt sein, oder auch während der Fahrt erlernt werden, z. B. durch Auswertung der ermittelten dynamischen Radien jeweils unmittelbar vor und unmittelbar nach einer Änderung des Fahrzeugantriebsmodus.

In einer Ausführungsform, bei der als weiterer (erster) Betriebsparameter der momentane Fahrzeugantriebsmodus ermittelt wird, erfolgt bei dem Ermitteln des momentanen dynamischen Innenradius eine z. B. mittels einer Nachschlagtabelle implementierte Korrektur in Abhängigkeit von dem ermittelten momentanen Fahrzeugantriebsmodus und der ermittelten momentanen Geschwindigkeit des Fahrzeuges.

Damit wird dem Umstand Rechnung getragen, dass eine sinnvolle Bemessung der vorstehend genannten Koeffizienten ($C_{Tq}$) relativ stark von der Geschwindigkeit des Fahrzeuges abhängt. Die unter Berücksichtigung der Fahrzeuggeschwindigkeit somit genauer realisierbare Korrektur kann wie folgt ausgedrückt werden:

$$r2_{dyn,DT} = C_{DT}(DT, v)$$

Hierbei bezeichnen DT den momentanen Fahrzeugantriebsmodus und v die momentane Geschwindigkeit des Fahrzeuges.

In einer Ausführungsform wird als weiterer (erster) Betriebsparameter die momentane Reifenmaterialdehnung basierend auf einem Reifenalter des Reifens ermittelt und es erfolgt bei dem Ermitteln des momentanen dynamischen Innenradius eine Korrektur in Abhängigkeit von der ermittelten momentanen Reifenmaterialdehnung.

Die Reifenmaterialdehnung beruht auf einem Alterungsprozess des Reifens und besitzt einen starken Einfluss im Hinblick auf die Profiltiefenermittlung. Wenn sich durch diesen Effekt der Innenradius des Reifens z. B. um 1 mm vergrößert, so bedeutet dies ohne Berücksichtigung dieses Effekts eine Überschätzung der Profiltiefe in etwa der gleichen Größenordnung. Die Reifenmaterialdehnung bedeutet bei normalem Reifenbetrieb ein kontinuierliches Anwachsen des ermittelten dynamischen Innenradius, insbesondere in einem frühen ersten Stadium der Lebensdauer eines neuen Reifens.

In einer Weiterbildung wird als Reifenalter im Rahmen der vorerwähnten Ausführungsform die Differenz zwischen einem momentanen Zeitpunkt und einem Zeitpunkt der Herstellung des Reifens verwendet. Der Herstellungszeitpunkt eines Reifens kann z. B. durch Werkstattpersonal nach einem Reifenwechsel in ein Steuergerät des Fahrzeuges eingegeben werden, um für das genannte Verfahren zur Verfügung zu stehen. Alternativ oder zusätzlich kann der Herstellungszeitpunkt als Bestandteil so genannter Reifeninformationsdaten (kurz: Reifendaten ) in einer in dem betreffenden Reifen angeordneten elektronischen Radeinheit hinterlegt sein, so dass diese Information von der elektronischen Radeinheit an eine Steuereinrichtung des Fahrzeuges übermittelt werden kann.

In einer anderen Weiterbildung wird als Reifenalter die Summe der bisherigen Zeitperioden verwendet, in denen der betreffende Reifen tatsächlich betrieben wurde, nachfolgend auch als kumulierte Reifenbetriebsdauer bezeichnet. Die erforderliche Summierung kann in einfacher Weise z.B. durch eine in dem Reifen angeordnete elektronische Radeinheit und/oder durch eine zentrale Steuereinrichtung des Fahrzeuges vorgenommen werden, wobei als Betrieb des Reifens z. B. dessen Drehung oder z. B. dessen Drehung mit einer vorbestimmten Mindestdrehgeschwindigkeit angesehen werden kann. In einer Weiterbildung werden die erwähnten Zeitperioden des Reifenbetriebes gewichtet addiert, z. B. mit einer Gewichtung abhängig von einem während der jeweiligen Zeitperioden ermittelten Belastungsparameter, um das Reifenalter zu erhalten. Der Belastungsparameter kann insbesondere z. B. abhängig von einem Ausmaß der Fahrzeuggeschwindigkeiten und/oder einem Ausmaß der Fahrzeugbeschleunigungen innerhalb der betreffenden Zeitperiode gewählt werden.

In einer anderen Weiterbildung wird als Reifenalter eine Reifenstrecke verwendet, definiert als die von dem betreffenden Reifen betriebsbedingt zurückgelegte Strecke, welche nachfolgend auch als Laufleistung des Reifens bezeichnet wird. In einer Weiterbildung werden hierbei einzelne zurückgelegte Teilstrecken gewichtet addiert (kumuliert), z. B. mit einer Gewichtung abhängig von einem während dem Befahren der jeweiligen Teilstrecken ermittelten Belastungsparameter, um das Reifenalter zu erhalten. Der Belastungsparameter kann insbesondere z. B. abhängig von einem Ausmaß der Fahrzeuggeschwindigkeiten und/oder einem Ausmaß der Fahrzeugbeschleunigungen innerhalb der betreffenden Teilstrecke gewählt werden.

In einer spezielleren Weiterbildung wird als Reifenalter ein mehrere der vorgenannten drei Parameter (Zeitspanne seit Herstellung, kumulierte Reifenbetriebsdauer, Laufleistung) kombinierender Reifenalterparameter verwendet. Eine solche Kombination kann z. B. mathematisch betrachtet als Linearkombination realisiert sein, bei der die drei Parameter jeweils mit einem Gewichtungskoeffizienten gewichtet aufsummiert werden.

In einer Weiterbildung wird die momentane Reifenmaterialdehnung ermittelt basierend auf einer vorbestimmten Modellfunktion zur Abbildung des momentanen Reifenalters des Reifens auf die momentane Reifenmaterialdehnung, wobei die Modellfunktion eine konkave Funktion ist.

Hierbei kann die Modellfunktion beispielsweise vorbestimmt werden in Abhängigkeit von Reifeninformationsdaten des Reifens, welche z. B. durch Werkstattpersonal eingespeichert werden.

In einer Weiterbildung erfolgt in einer ersten Phase unmittelbar nach Installation eines neuen Reifens das Ermitteln der Profiltiefe basierend auf dem momentanen Reifenalter des Reifens, wobei in einer sich z.B. daran anschließenden oder noch vor Ende der ersten Phase beginnenden zweiten Phase ein Anlernen eines Einflusses der Geschwindigkeit des Fahrzeuges auf den momentanen dynamischen Radradius erfolgt und wobei erst in einer sich daran anschließenden dritten Phase das Ermitteln der Profiltiefe basierend auf dem ermittelten momentanen dynamischen Radradius und dem ermittelten momentanen dynamischen Innenradius erfolgt.

Auch bei dieser Weiterbildung kann in der ersten Phase das Reifenalter zwecks Ermittlung der Profiltiefe wie weiter oben bereits bei der Ermittlung der Reifenmaterialdehnung erläutert in verschiedener Weise definiert verwendet werden.

Bei dem Ermitteln der Profiltiefe basierend auf dem momentanen Reifenalter in der ersten Phase ist jedoch die Verwendung der Zeitspanne seit Reifenherstellung zumeist weniger vorteilhaft im Vergleich zur Verwendung der kumulierten Reifenbetriebsdauer und/oder der Laufleistung.

In der ersten Phase kann beim Ermitteln der Profiltiefe beispielsweise vorgesehen sein, dass die Profiltiefe in Abhängigkeit von der Laufleistung linear abnimmt.

Eine Beendigung der ersten Phase kann z. B. bei Erfüllung eines vorgegebenen Beendigungskriteriums vorgesehen sein, beispielsweise wenn das Reifenalter einen vorbestimmten Reifenalterschwellwert überschreitet, z. B. Laufleistung größer 1 000 km. Der Schwellwert kann z. B. reifentypabhängig vorbestimmt sein, z. B. bestimmt anhand der bereits erwähnten Reifeninformationsdaten.

Das in der zweiten Phase vorgesehene Anlernen des Einflusses der Geschwindigkeit des Fahrzeuges auf den momentanen dynamischen Radradius kann z. B. dergestalt erfolgen, dass über ein vorbestimmtes, relativ kleines Reifenalterintervall (z. B. maximal 10 % des vorerwähnten Reifenalterschwellwerts oder z. B. fest vorgegebene Reifenstrecke im Bereich von 5 km bis 100 km, z. B. 10 km oder 20 km) eine Mehrzahl von Messdatenpunkten aufgenommen werden, die jeweils für den identischen Zeitpunkt ermittelte Werte der Fahrzeuggeschwindigkeit und des dynamischen Radradius beinhalten, und dass anhand einer statistischen Analyse der so erhaltenen Messdatenpunkte der Einfluss der Fahrzeuggeschwindigkeit auf den dynamischen Radradius quantifiziert wird.

Eine Beendigung der zweiten Phase kann z. B. bei Erfüllung eines entsprechenden Beendigungskriteriums vorgesehen sein. Für die konkrete Definition dieses Kriteriums gibt es vielfältige Möglichkeiten. Eine Möglichkeit besteht darin, für die zweite Phase ein vorbestimmtes Reifenalterintervall vorzusehen. Eine andere Möglichkeit besteht z. B. darin, die zweite Phase solange fortzusetzen bzw. die vorerwähnte Quantifizierung des Einflusses der Geschwindigkeit zu wiederholen, bis anhand der Ergebnisse der Quantifizierungen der Fall eintritt, dass dieser Einfluss sich nurmehr wenig ändert, z. B. unterhalb einer vorgegebenen Änderungsschwelle. Dieser Fall kann so interpretiert werden, dass der Effekt der Reifenmaterialdehnung weitgehend abgeschlossen ist, und im folgenden Betrieb des Reifens nurmehr kleinere Zuwächse des dynamischen Innenradius zu erwarten sind.

In einer Ausführungsform wird in der zweiten Phase, beispielsweise bei Beendigung der zweiten Phase, die vorerwähnte Modellfunktion bestimmt, indem die in der zweiten Phase und gegebenenfalls auch in der ersten Phase ermittelten Größen ausgewertet werden.

Für eine vorteilhaft unterbrechungsfreie Ermittlung der Profiltiefe ist gemäß einer Ausführungsform vorgesehen, dass die vorerwähnte erste Phase erst beendet wird, wenn die dritte Phase beginnt. Insofern kann z.B. das vorerwähnte Kriterium zur Beendigung der zweiten Phase und Beginn der dritten Phase gleichzeitig zur Beendigung der ersten Phase verwendet werden.

Im Hinblick auf den bei der Erfindung vorgesehenen Schritt des Ermittelns der Profiltiefe des Reifens basierend auf dem ermittelten momentanen dynamischen Radradius und dem ermittelten momentanen dynamischen Innenradius, z. B. in der vorerwähnten dritten Phase,) leuchtet ein, dass die Methode, die Profiltiefe einfach als die Differenz zwischen dem dynamischen Radradius und dem dynamischen Innenradius zu bestimmen, jedenfalls dann gut funktioniert, wenn der betreffende Reifen trotz darauf wirkender Rad- bzw. Reifenlast weitgehend seine kreisrunde Form behält, also die so genannte Reifenaufstandsfläche relativ klein ist, was tendenziell z. B. bei hohem Reifendruck und/oder niedriger Reifenlast zutreffend ist. Zu bedenken ist jedoch, dass als Profiltiefe eines Reifens in der Praxis die Differenz zwischen einem geometrischen Radradius und einem geometrischen Innenradius angesehen wird, also den vom Reifenbetrieb an einem Fahrzeug völlig unabhängigen Radien, die an einem z. B. vom Fahrzeug abgenommenen Reifen als solchem gemessen werden. Die dynamischen Radien (dynamischer Radradius und dynamischer Innenradius) im Betrieb des Reifens weichen davon jedoch mehr oder weniger stark ab, so dass die Bestimmung der Profiltiefe als Differenz der dynamischen und nicht der geometrischen Radien typischerweise nur eine Näherung darstellen kann.

Gemäß einer Weiterbildung der Erfindung ist daher zur weiteren Erhöhung der Ermittlungsgenauigkeit vorgesehen, dass das Ermitteln der Profiltiefe unter Berücksichtigung einer vorab für die Art des Reifens ermittelten Korrekturgröße erfolgt, wobei die Korrekturgröße den Zusammenhang zwischen einer Änderung der Profiltiefe einerseits und einer daraus resultierenden Änderung der Differenz zwischen dem dynamischen Radradius und dem dynamischen Innenradius andererseits charakterisiert.

Es hat sich herausgestellt, dass durch Berücksichtigung einer derartigen, zumindest von der Art des Reifens abhängigen Korrekturgröße die Ermittlung der Profiltiefe vorteilhaft mit verbesserter Genauigkeit realisiert werden kann.

Um diese Korrekturgröße vorab zu ermitteln, kann z. B. ein Exemplar des betreffenden Reifens auf einem Prüfstand unter kontrollierten Betriebsbedingungen und insbesondere kontrollierter Variation von Betriebsparametern einschließlich der Profiltiefe betrieben und dabei vermessen werden, um als Ergebnis dieser Vermessung die Korrekturgröße zu bestimmen.

Die Korrekturgröße stellt im Rahmen der Weiterbildung ein Mittel dar, mittels welchem eine Korrelation der oben erwähnten dynamischen Radien und geometrischen Radien hergestellt bzw. nutzbringend eingesetzt wird.

In einer besonders einfachen Ausführungsform wird als die Korrekturgröße eine für die Art des Reifens charakteristische Korrekturkonstante verwendet, die das Verhältnis zwischen der Änderung der Profiltiefe einerseits und der daraus resultierenden Änderung der Differenz zwischen dem dynamischen Radradius und dem dynamischen Innenradius andererseits darstellt.

Es kann hierbei vorteilhaft insbesondere eine Korrekturkonstante verwendet werden, die größer als 1 ist und z. B. wenigstens 1,5, insbesondere wenigstens 2 beträgt, je nach Art des Reifens.

Andererseits ist es zumeist zweckmäßig, wenn die Korrekturkonstante maximal 8, insbesondere maximal 5 beträgt.

Wenn als die Korrekturgröße eine derartige Korrekturkonstante verwendet wird, so kann beim Ermitteln der Profiltiefe unter Berücksichtigung der Korrekturkonstante jede Änderung der Differenz zwischen dem dynamischen Radradius und dem dynamischen Innenradius mathematisch abgebildet werden auf eine entsprechende Änderung der Profiltiefe.

Die Abbildung, also die mathematische Funktion, stellt in diesem Fall eine lineare Funktion dergestalt dar, dass eine Änderung der Differenz zwischen dynamischem Radradius und dynamischem Innenradius mit der Korrekturkonstante multipliziert die zugehörige Änderung der Profiltiefe ergibt.

An dieser Stelle sei angemerkt, dass ganz allgemein eine Bestimmung einer Änderung der Profiltiefe insofern als gleichbedeutend mit einer Bestimmung der Profiltiefe ist, als sich aufgrund der Bekanntheit einer anfänglichen Profiltiefe aus jeder nachfolgenden Profiltiefenänderung die momentane Profiltiefe ergibt, nämlich als anfängliche Profiltiefe abzüglich Profiltiefenänderung.

Die anfängliche Profiltiefe, z. B. die Profiltiefe eines Neureifens oder z. B. die bei Montage eines Gebrauchtreifens anfänglich gemessene Profiltiefe, kann z. B. in einer Speichereinrichtung eines zur Durchführung des Verfahrens verwendeten Systems hinterlegt sein, z. B. in einer Steuereinrichtung des Fahrzeuges oder in einer elektronischen Radeinheit an dem betreffenden Reifen. Sodann kann in erfindungsgemäßer Weise die Profiltiefe fortlaufend aktualisiert werden.

In einer verallgemeinerten und zur weiteren Erhöhung der Ermittlungsgenauigkeit geeigneten Weiterbildung wird als die Korrekturgröße eine für die Art des Reifens charakteristische Korrekturfunktion zur Abbildung einer Differenz zwischen dem dynamischen Radradius und dem dynamischen Innenradius auf eine Änderung der Profiltiefe verwendet.

Damit kann vorteilhaft z. B. abweichend von der erläuterten Berücksichtigung einer Korrekturkonstante bzw. der Verwendung einer linearen Funktion auch eine der betreffenden Art von Reifen noch besser angepasste Abbildung einer Differenz zwischen dem dynamischen Radradius und dem dynamischen Innenradius auf eine Änderung der Profiltiefe realisiert werden.

In einer Ausführungsform ist vorgesehen, dass die Korrekturfunktion zudem von zumindest einem Funktionsparameter abhängt, ausgewählt aus der Gruppe bestehend aus der Geschwindigkeit des Fahrzeuges, der Reifentemperatur, dem Reifendruck und der Reifenlast.

Alternativ oder zusätzlich kann z. B. vorgesehen sein, dass der Funktionswert zudem von dem dynamischen Radradius und/oder dem dynamischen Innenradius abhängt und somit nicht zwingend nur von der Differenz zwischen diesen beiden Größen.

Zur Realisierung der letzteren Ausführungsformen ist es zweckmäßig, bei der bereits erwähnten Vermessung eines Exemplars einer bestimmten Art von Reifen und/oder einer Vermessung mehrerer Exemplare gleicher Art jedoch unterschiedlicher Profiltiefe auf einem Prüfstand einen oder mehrere speziell derjenigen Parameter kontrolliert zu variieren, die als Funktionsparameter der Korrekturfunktion vorgesehen sind. Basierend auf dem Ergebnis einer derartigen Vermessung kann sodann die benötigte Korrekturfunktion z. B. durch eine mathematische Ausgleichsrechnung (Fit) festgelegt werden, wobei die Korrekturfunktion insbesondere durch eine oder mehrere Kennlinien bzw. Nachschlagtabellen definiert sein kann.

Dementsprechend ist in einer Ausführungsform vorgesehen, dass das Berücksichtigen der Korrekturfunktion beim Ermitteln der Profiltiefe mittels zumindest einer, in einer Speichereinrichtung abgelegten Kennlinie erfolgt.

Die zumindest eine Kennlinie kann insbesondere z. B. einen Zusammenhang zwischen einer Änderung der Profiltiefe oder der Profiltiefe selbst und anderen im Rahmen des Verfahrens ermittelten Größen kennzeichnen, insbesondere z. B. der Differenz zwischen dem dynamischen Radradius und dem dynamischen Innenradius. Bevorzugt ist eine Vielzahl von Kennlinien oder ein Kennlinienfeld vorgesehen, das beim Ermitteln der Änderung der Profiltiefe bzw. der Profiltiefe selbst in der Art einer Nachschlagtabelle genutzt werden kann, um basierend auf den Werten der betreffenden, zuvor ermittelten Größen die Profiltiefenänderung bzw. die Profiltiefe auszulesen.

In einer Ausführungsform ist vorgesehen, dass zudem zumindest ein zweiter Betriebsparameter ermittelt wird, ausgewählt aus der Gruppe bestehend aus einer momentanen Beschleunigung des Fahrzeuges, einer momentanen Gierrate des Fahrzeuges, einem momentanen Lenkwinkel, einem momentanen Drehmoment eines Antriebsmotors des Fahrzeuges und einem Betriebszustand einer Bremsvorrichtung des Fahrzeuges, wobei das Ermitteln der Profiltiefe zudem in Abhängigkeit des zumindest einen ermittelten zweiten Betriebsparameters erfolgt.

Mit der Berücksichtigung zumindest eines derartigen zweiten Betriebsparameters kann z. B. die Genauigkeit der Profiltiefermittlung weiter verbessert werden. Alternativ kann die Ermittlung zumindest eines derartigen zweiten Betriebsparameters jedoch auch dazu genutzt werden, eine für die Profiltiefenermittlung ungünstige Betriebssituation , in der z. B. eine übermäßig große Beschleunigung des Fahrzeuges erfolgt, zu erkennen und in derartigen Situationen die Profiltiefenermittlung bis zum Erreichen einer wieder günstigeren Betriebssituation zurückzustellen bzw. die während der ungünstigen Situation ermittelten Werte der Profiltiefe z. B. als ungenau und/oder ungültig zu kennzeichnen oder zu verwerfen.

In einer Ausführungsform ist der zumindest eine erste Sensor als Drehzahlsensor ausgebildet.

Mit einem Drehzahlsensor kann die Drehgeschwindigkeit des Rades in einfacher und zuverlässiger Weise ermittelt werden. Beispielsweise sind bei modernen Kraftfahrzeugen hierfür nutzbare Drehzahlsensoren vorteilhaft in der Regel ohnehin vorgesehen, z. B. zum Zwecke des Betriebs von Sicherheits- und Komfortsystemen wie z. B. eines Antiblockiersystems (ABS) oder eines Elektronischen Stabilitätsprogrammes (ESP).

In einer Ausführungsform ist der zumindest eine zweite Sensor ausgewählt aus der Gruppe, bestehend aus einem satellitengestützten Positionsermittlungssensor, einem Radarsensor, einem Lidarsensor, einem Ultraschallsensor und einer optischen Kamera.

Auch wenigstens ein derartiger Sensor ist z. B. in modernen Fahrzeugen oftmals ohnehin vorhanden, so dass dieser vorteilhaft im Rahmen der Erfindung mitgenutzt werden kann.

In einer Ausführungsform ist vorgesehen, dass das Ermitteln des momentanen dynamischen Innenradius zudem basierend auf der ermittelten momentanen Geschwindigkeit des Fahrzeuges und/oder zudem basierend auf der Art des Reifens erfolgt.

Die genannten Parameter können ebenfalls einen Einfluss auf den Innenradius des Rades besitzen, so dass durch deren Mitberücksichtigung vorteilhaft die Genauigkeit der Innenradiusermittlung und folglich auch der Profiltiefenermittlung verbessert werden kann.

In einer Ausführungsform erfolgt das Ermitteln des momentanen dynamischen Innenradius mittels zumindest einer, in einer Speichereinrichtung abgelegten Kennlinie.

Die zumindest eine Kennlinie kann insbesondere einen Zusammenhang zwischen dem dynamischen Innenradius und dem zumindest einen ersten Betriebsparameter und/oder dem zumindest einen weiteren (ersten) Betriebsparameter des Rades kennzeichnen. Bevorzugt ist eine Vielzahl von Kennlinien oder ein Kennlinienfeld vorgesehen, das beim Ermitteln des Innenradius in der Art einer Nachschlagtabelle genutzt werden kann.

Ein zweiter Aspekt der Erfindung betrifft eine Steuereinrichtung für ein Fahrzeug zum Ermitteln einer Profiltiefe eines Profils eines Reifens des Fahrzeuges, aufweisend:

- eine Empfangseinrichtung, ausgebildet zum Empfangen einer momentanen Drehgeschwindigkeit eines den Reifen aufweisenden Rades des Fahrzeuges, einer momentanen Geschwindigkeit des Fahrzeuges und zumindest eines ersten Betriebsparameters des Reifens, ausgewählt aus der Gruppe bestehend aus einer momentanen Reifentemperatur, einem momentanen Reifendruck und einer momentanen Reifenlast,

- eine erste Ermittlungseinrichtung, ausgebildet zum Ermitteln eines momentanen dynamischen Radradius des den Reifen aufweisenden Rades basierend auf der empfangenen momentanen Drehgeschwindigkeit und der empfangenen momentanen Geschwindigkeit des Fahrzeuges,

- eine zweite Ermittlungseinrichtung, ausgebildet zum Ermitteln eines momentanen dynamischen Innenradius des Rades basierend auf dem zumindest einen empfangenen ersten Betriebsparameter, wobei der Innenradius des Rades der Abstand zwischen einer Radmitte und einem reifenseitigen Ansatz des Profils ist, und

- eine dritte Ermittlungseinrichtung, ausgebildet zum Ermitteln einer Profiltiefe des Profils des Reifens basierend auf dem ermittelten momentanen dynamischen Radradius und dem ermittelten momentanen dynamischen Innenradius.

Die Empfangseinrichtung ist ferner dazu ausgebildet, wenigstens einen weiteren (ersten) Betriebsparameter des Reifens zu empfangen, ausgewählt aus der Gruppe bestehend aus einer momentanen Fahrbahnsteigung, einem momentanen Fahrzeugantriebsmodus und einer momentanen Reifenmaterialdehnung. Die Empfangseinrichtung ist somit ausgebildet zum Empfangen einer momentanen Drehgeschwindigkeit eines den Reifen aufweisenden Rades des Fahrzeuges, einer momentanen Geschwindigkeit des Fahrzeuges, zumindest eines ersten Betriebsparameters des Reifens, ausgewählt aus der Gruppe bestehend aus einer momentanen Reifentemperatur, einem momentanen Reifendruck und einer momentanen Reifenlast, und wenigstens eines weiteren (ersten) Betriebsparameters des Reifens, ausgewählt aus der Gruppe, bestehend aus einer momentanen Fahrbahnsteigung, einem momentanen Fahrzeugantriebsmodus und einer momentanen Reifenmaterialdehnung.

Die zweite Ermittlungseinrichtung ist zudem dazu ausgebildet, den momentanen dynamischen Innenradius ferner basierend auf dem wenigstens einen ermittelten weiteren (ersten) Betriebsparameter zu ermitteln. Die zweite Ermittlungseinrichtung ist somit dazu ausgebildet, den momentanen dynamischen Innenradius basierend auf dem zumindest einen ermittelten ersten Betriebsparameter und dem wenigstens einen ermittelten weiteren (ersten) Betriebsparameter zu ermitteln.

Die Steuereinrichtung kann z. B. als eine eigenständige Einrichtung zum Zwecke der Ermittlung der Profiltiefe an wenigstens einem, bevorzugt mehreren, oder sämtlichen Reifen des Fahrzeuges ausgebildet sein. Alternativ kann die Steuereinrichtung einen Bestandteil oder eine Teilfunktionalität einer zusätzlich auch anderen Zwecken dienenden Steuereinrichtung des Fahrzeuges darstellen, z. B. eines zentralen Steuergerätes des Fahrzeuges, eines Steuergerätes eines Antiblockiersystems oder eines Fahrdynamikregelsystems.

Sämtliche im Zusammenhang mit dem Verfahren gemäß dem ersten Aspekt der Erfindung hier beschriebenen Ausführungsformen und besonderen Ausgestaltungen können in entsprechender Weise, einzeln oder in beliebiger Kombination, auch als Ausführungsformen bzw. besondere Ausgestaltungen der Steuereinrichtung gemäß dem zweiten Aspekt der Erfindung und des nachfolgend beschriebenen Systems gemäß einem weiteren Aspekt der Erfindung vorgesehen sein.

Gemäß eines weiteren Aspekts der Erfindung wird somit ein System für ein Fahrzeug zum Ermitteln einer Profiltiefe eines Profils eines Reifens des Fahrzeuges vorgeschlagen, aufweisend eine Steuereinrichtung der hier beschriebenen Art und zumindest eine elektronische Radeinheit, wobei die zumindest eine elektronische Radeinheit in dem Reifen anordenbar ist und zumindest einen Sensor aufweist, ausgewählt aus der Gruppe, bestehend aus einem Temperatursensor, einem Drucksensor, einem Beschleunigungssensor (einschließlich eines Schocksensors) und einem Verformungssensor.

Die Erfindung wird nachfolgend anhand von Ausführungsbeispielen mit Bezug auf die beigefügten Zeichnungen weiter beschrieben. Es stellen dar:

Fig. 1      ein Flussdiagramm eines Verfahrens zum Ermitteln einer Profiltiefe eines Profils eines Reifens,

Fig. 2      eine schematische Draufsicht eines Fahrzeuges mit einem System, mittels welchem das Verfahren von Fig. 1 durchgeführt werden kann,

Fig. 3      eine schematische Seitenansicht eines Rades des Fahrzeuges von Fig. 2,

Fig. 4      eine schematische Seitenansicht eines Reifens des Rades von Fig. 3 zur Erläuterung geometrischer Verhältnisse gemäß eines Reifenmodells in einem ersten Grenzfall,

Fig. 5      eine schematische Seitenansicht des Reifens des Rades von Fig. 3 zur Erläuterung geometrischer Verhältnisse gemäß des Reifenmodells in einem zweiten Grenzfall,

Fig. 6      ein Blockschaltbild einer in dem System des Fahrzeuges von Fig. 2 verwendeten elektronischen Radeinheit,

Fig. 7      eine Darstellung zur Veranschaulichung eines Reifenbetriebs an einem Fahrzeug auf einer Fahrbahn mit von Null verschiedener Fahrbahnsteigung,

Fig. 8      eine Darstellung zur Veranschaulichung verschiedener Fahrzeugantriebsmodi bei einem Fahrzeug und

Fig. 9      eine beispielhafte Auftragung eines durch Reifenmaterialdehnung verursachten Zusatzbeitrags zum dynamischen Innenradius eines Reifens in Abhängigkeit von einer Laufleistung des Reifens.

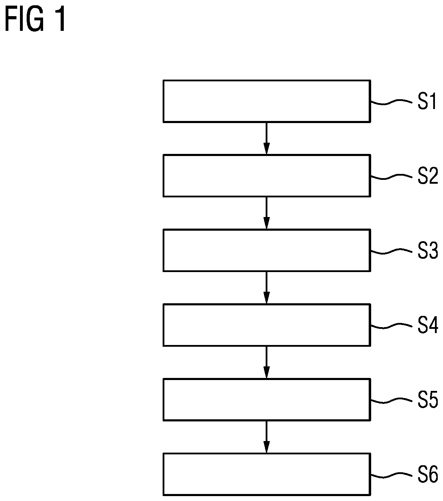

Fig. 1 zeigt ein Flussdiagramm eines Verfahrens zum Ermitteln einer Profiltiefe eines Profils eines Reifens während eines Betriebs eines den Reifen aufweisenden Fahrzeuges gemäß eines Ausführungsbeispiels.

In einem Schritt S1 erfolgt ein Ermitteln einer momentanen Drehgeschwindigkeit eines den Reifen aufweisenden Rades des Fahrzeuges basierend auf von zumindest einem ersten Sensor ermittelten Daten. Beispielsweise erfolgt ein Ermitteln einer momentanen Winkelgeschwindigkeit $\omega$ des Rades. Der zumindest eine erste Sensor ist dazu bevorzugt als Drehzahlsensor ausgebildet.

In einem Schritt S2 erfolgt ein Ermitteln einer momentanen Geschwindigkeit v des Fahrzeuges (Fahrzeuglängsgeschwindigkeit) basierend auf von zumindest einem, von dem zumindest einen ersten Sensor verschiedenen zweiten Sensor ermittelten Daten. Das Ermitteln der momentanen Geschwindigkeit v beinhaltet typischerweise ein Ermitteln eines Wertes einer in einem bestimmten Zeitintervall zurückgelegten Fahrtstrecke des Fahrzeuges basierend auf den von dem zumindest einen zweiten Sensor ermittelten Daten. Der zumindest eine zweite Sensor ist dazu beispielsweise als satellitengestützter Positionsermittlungssensor (z. B. als GPS-Einrichtung) ausgebildet. Weiterhin kann der zumindest eine zweite Sensor z. B. als Radarsensor, Lidarsensor, Ultraschallsensor oder optische Kamera ausgebildet sein, um damit z. B. einen Abstand des Fahrzeuges zu als ortsfest erkannten Objekten zu verschiedenen Zeitpunkten zu bestimmen und daraus die zurückgelegte Fahrtstrecke des Fahrzeuges zu ermitteln.

In einem Schritt S3 erfolgt ein Ermitteln eines momentanen dynamischen Radradius $r1_{dyn}$ des den Reifen aufweisenden Rades basierend auf der ermittelten momentanen Drehgeschwindigkeit, d.h. in dem gezeigten Ausführungsbeispiel der Winkelgeschwindigkeit $\omega$, und der ermittelten momentanen Fahrzeuggeschwindigkeit v. Dies erfolgt in dem gezeigten Ausführungsbeispiel mittels der Beziehung $v = r1_{dyn} \cdot \omega$, wobei wie bereits erläutert v die momentane Geschwindigkeit des Fahrzeuges, $r1_{dyn}$ den momentanen dynamischen Radradius des Rades und $\omega$ die momentane Winkelgeschwindigkeit des Rades bezeichnen.

In einem Schritt S4 erfolgt ein Ermitteln zumindest eines ersten Betriebsparameters des Reifens, ausgewählt aus der Gruppe bestehend aus einer momentanen Reifentemperatur T, einem momentanen Reifendruck p und einer momentanen Reifenlast RL. Bevorzugt werden dabei wenigstens zwei, insbesondere sämtliche drei der genannten Parameter ermittelt. Insbesondere die genannten Parameter können z. B. mittels einer in dem betreffenden Reifen angeordneten elektronischen Radeinheit ermittelt werden, wie dies im Zusammenhang mit den weiteren Figuren noch näher erläutert wird.

Außerdem werden in dem Schritt S4 in dem gezeigten Ausführungsbeispiel ferner drei weitere erste Betriebsparameter des Reifens (welche kurz auch als "weitere Betriebsparameter" bezeichnet werden können) ermittelt, nämlich eine momentane Fahrbahnsteigung SL, ein momentaner Fahrzeugantriebsmodus DT und eine momentane Reifenmaterialdehnung BE.

Die momentane Fahrbahnsteigung SL ist in dem dargestellten Beispiel definiert als der in Fahrtrichtung betrachtete momentane Anstiegswinkel, d.h. der Winkel der Fahrbahn bezüglich der Horizontalrichtung.

Der momentane Fahrzeugantriebsmodus DT ist in dem dargestellten Beispiel eine Betriebszustandsangabe, aus welcher hervorgeht, wie ein von einer Antriebseinrichtung des Fahrzeuges erzeugtes Antriebsmoment momentan auf die Räder des Fahrzeuges verteilt wird.

Die momentane Reifenmaterialdehnung BE ist in dem dargestellten Beispiel definiert als das momentane Ausmaß eines Zusatzbeitrages $r2_{dyn,BE}$ zu dem insgesamt sich ergebenden dynamischen Innenradius $r2_{dyn}$ des Reifens.

In einem Schritt S5 erfolgt ein Ermitteln des momentanen dynamischen Innenradius $r2_{dyn}$ des Rades basierend auf dem zumindest einen ermittelten ersten Betriebsparameter (T und/oder p und/oder RL) und den ermittelten weiteren (ersten) Betriebsparametern (SL und DT und BE), wobei der Innenradius des Rades der Abstand zwischen der Radmitte und dem reifenseitigen Ansatz des Profils ist.

Das Ermitteln des momentanen dynamischen Innenradius $r2_{dyn}$ kann hierbei zudem basierend auf der ermittelten momentanen Geschwindigkeit v des Fahrzeuges und/oder zudem basierend auf der Art des Reifens erfolgen, da auch diese Parameter einen Einfluss auf den in einer Betriebssituation sich ergebenden Innenradius des Reifens besitzen können. Die Reifenart kann beispielsweise in einer Speichereinrichtung einer betreffenden elektronischen Radeinheit hinterlegt sein, z. B. zusammen mit einer anfänglichen Profiltiefe.

Die Art des Reifens bzw. hierzu hinterlegte Daten können insbesondere z. B. spezifizieren, ob es sich um einen Sommerreifen, einen Winterreifen oder einen Ganzjahresreifen handelt und/oder angeben, ob das Reifenmaterial eher hart oder eher weich ist (insbesondere auch quantitativ) und/oder eine Art des Profils spezifizieren.

Die Art des Profils bzw. hierzu hinterlegte Daten können insbesondere z. B. das durch Erhabenheiten und Vertiefungen definierte Profilmuster und/oder daraus sich ergebende physikalische Eigenschaften des Profils spezifizieren.

Das Ermitteln des momentanen dynamischen Innenradius $r2_{dyn}$ erfolgt bevorzugt mittels zumindest einer, in einer Speichereinrichtung abgelegten Kennlinie.

Typischerweise nimmt der dynamische Innenradius $r2_{dyn}$ des Rades mit steigender Reifentemperatur T und mit steigendem Reifendruck p zu, wohingegen eine steigende Reifenlast RL typischerweise zu einer Verringerung des dynamischen Innenradius $r2_{dyn}$ führt. Mit steigender Geschwindigkeit v des Fahrzeuges nimmt der dynamische Innenradius $r2_{dyn}$ typischerweise zu, wobei die Zunahme des Innenradius $r2_{dyn}$ typischerweise bei Erreichen eines bestimmten Geschwindigkeitsbereiches in eine Sättigung übergeht.

Die genannten Abhängigkeiten können vorteilhafterweise z. B. durch eine entsprechende Vermessung eines Exemplares eines Reifens der betreffenden Art von Reifen auf einem Prüfstand vorab ermittelt werden, um eine oder bevorzugt mehrere Kennlinien bzw. ein Kennlinienfeld für die betreffende Art von Reifen zu bestimmen. Bei der Durchführung des erfindungsgemäßen Verfahrens während des Betriebs des Fahrzeuges kann bei der Ermittlung des dynamischen Innenradius $r2_{dyn}$ dann auf derartige in einer Speichereinrichtung hinterlegte Kennlinien zurückgegriffen werden.

Das in dem Schritt S4 durchgeführte Ermitteln des momentanen dynamischen Innenradius basiert zudem auf den weiteren (ersten) Betriebsparametern SL, DT und BE. In dem dargestellten Beispiel wird die momentane Fahrbahnsteigung SL zum einen dergestalt berücksichtigt, dass dann, wenn ein Absolutwert von SL einen vorbestimmten Fahrbahnsteigungsschwellwert überschreitet, die Erfassungssituation als sehr ungünstig beurteilt und alle momentan ermittelten Größen für die Profiltiefenermittlung als ungültig verworfen werden. Zum anderen, falls der Absolutwert von SL den Fahrbahnsteigungsschwellwert nicht übersteigt, so wird unter Berücksichtigung von SL und zumindest der Geschwindigkeit v des Fahrzeuges ein Zusatzbeitrag $r2_{dyn,SL}$ berechnet und einem zuvor ohne Berücksichtigung von SL berechneten Wert von $r2_{dyn}$ hinzuaddiert (Korrektur von $r2_{dyn}$ aufgrund Fahrbahnsteigung SL) .

In dem dargestellten Beispiel kann der momentane Fahrzeugantriebsmodus DT aus so genannten "torque vectoring"-Daten einer Fahrzeugelektronik bestimmt werden und somit ein Gesamtantriebsmoment (positiv oder negativ) des Fahrzeuges sowie dessen Verteilung auf die einzelnen Räder des Fahrzeuges bekannt sein. In dem dargestellten Beispiel erfolgt dann die Berücksichtigung von DT ähnlich wie bei SL, nämlich durch Berechnung eines Zusatzbeitrages $r2_{dyn,DT}$ zur weiteren Korrektur von $r2_{dyn}$.

Der Zusatzbeitrag aufgrund DT ist im Allgemeinen von Rad zu Rad verschieden groß, abhängig von DT, und kann in guter Näherung (ebenso wie der Zusatzbeitrag aufgrund SL) als linearer Korrekturterm, d. h. proportional zu einem Antriebsmoment bzw. einem Zusatzantriebsmoment des betreffenden Rades berechnet werden.

In dem dargestellten Beispiel wird die momentane Reifenmaterialdehnung BE basierend auf einer vorbestimmten Modellfunktion ermittelt, welche eine Laufleistung, in dem dargestellten Beispiel eine kumulierte bisherige Fahrstrecke, des betreffenden Reifens auf die momentane Reifenmaterialdehnung BE abbildet, und bei welcher es sich um eine konkave Funktion handelt, ähnlich einer Funktion, welche einen Wert auf die Quadratwurzel dieses Werts abbildet.

Die konkret gewählte Modellfunktion oder diese bestimmende Funktionsparameter können beispielweise in einer Speichereinrichtung der betreffenden elektronischen Radeinheit hinterlegt sein und somit nach Abruf durch eine Steuereinrichtung verwendet werden.

Abweichend von dieser Ausführungsform kann z.B. auch vorgesehen sein, die Modellfunktion zu ermitteln und/oder zu aktualisieren (zu verbessern), indem im Betrieb des Fahrzeuges zumindest von Zeit zu Zeit ein Anlernen eines Einflusses der Geschwindigkeit v des Fahrzeuges auf den momentanen dynamischen Radradius $r1_{dyn}$ erfolgt, um anhand einer über größere Reifenalterintervalle (z. B. mindestens 1 000 km Laufleistung) betrachteten quantitativen Änderung dieses Einflusses einen Rückschluss darauf zu ziehen, an welchem Punkt auf dem Graphen der Modellfunktion man sich momentan befindet, und um anhand der in einer derartigen Anlernphase gesammelten Daten die zukünftig zu verwendende Modellfunktion festzulegen oder zu aktualisieren. Nach einer Beendigung der Anlernphase kann in einer sich daran anschließenden weiteren Phase das Ermitteln der Profiltiefe (im letzten Schritt des erfindungsgemäßen Verfahrens) basierend auf $r1_{dyn}$ und $r2_{dyn}$ erfolgen, wobei die Modellfunktion bei der Ermittlung von $r2_{dyn}$ entsprechend berücksichtigt wird. Solange noch keine hierfür verwendbare Modellfunktion festgelegt ist, kann die Ermittlung der Profiltiefe in einer anderen Weise durchgeführt werden, z. B. berechnet als proportional zur Laufleistung abnehmend.

In einem Schritt S6 erfolgt ein Ermitteln der Profiltiefe td des Profils des Reifens basierend auf dem ermittelten momentanen dynamischen Radradius $r1_{dyn}$ und dem ermittelten momentanen dynamischen Innenradius $r2_{dyn}$.

Der Lehre der bereits eingangs erwähnten DE 10 2012 217 901 B3 folgend würde diese Profiltiefenermittlung (Schritt S6) basierend auf den beiden genannten Größen auf der Grundlage folgender Beziehung erfolgen:

$$td = r1_{dyn} - r2_{dyn}$$

Wenngleich diese Beziehung für viele Arten von Reifen und viele Betriebssituationen betreffend Reifen und/oder Fahrzeug gute Ergebnisse liefert, so hat sich herausgestellt, dass die Profiltiefenermittlung basierend zumindest auf dynamischem Radradius $r1_{dyn}$ und dynamischem Innenradius $r2_{dyn}$ durch eine Maßnahme weiter verbessert werden kann, wonach das Ermitteln der Profiltiefe td unter Berücksichtigung einer vorab für die Art des Reifens ermittelten Korrekturgröße erfolgt, wobei die Korrekturgröße den Zusammenhang einer Änderung der Profiltiefe td einerseits und einer daraus resultierenden Änderung der Differenz zwischen dem dynamischen Radradius $r1_{dyn}$ und dem dynamischen Innenradius $r2_{dyn}$ andererseits charakterisiert.

Während also gemäß des genannten Dokuments für sämtliche Reifenarten für die Profiltiefenermittlung vorausgesetzt wird, dass eine Änderung der Differenz zwischen $r1_{dyn}$ und $r2_{dyn}$ stets gleichbedeutend mit einer genauso großen Änderung von td ist ($\Delta td = \Delta (r1_{dyn} - r2_{dyn})$), wird gemäß dieses Ausführungsbeispiels bei der Profiltiefenermittlung die Erkenntnis genutzt, dass dieser Zusammenhang zwar eine gute Näherung darstellt, die jedoch insbesondere für bestimmte Arten von Reifen und/oder in bestimmten Betriebssituationen des Reifens und/oder des Fahrzeuges nicht stets zufriedenstellende Ergebnisse liefert.

Vorteilhaft wird in dem Ausführungsbeispiel ein mehr oder weniger großer systematischer Fehler bei der Profiltiefenermittlung durch die erwähnte Berücksichtigung der Korrekturgröße zumindest teilweise kompensiert, um das Ermittlungsergebnis entsprechend zu verbessern.

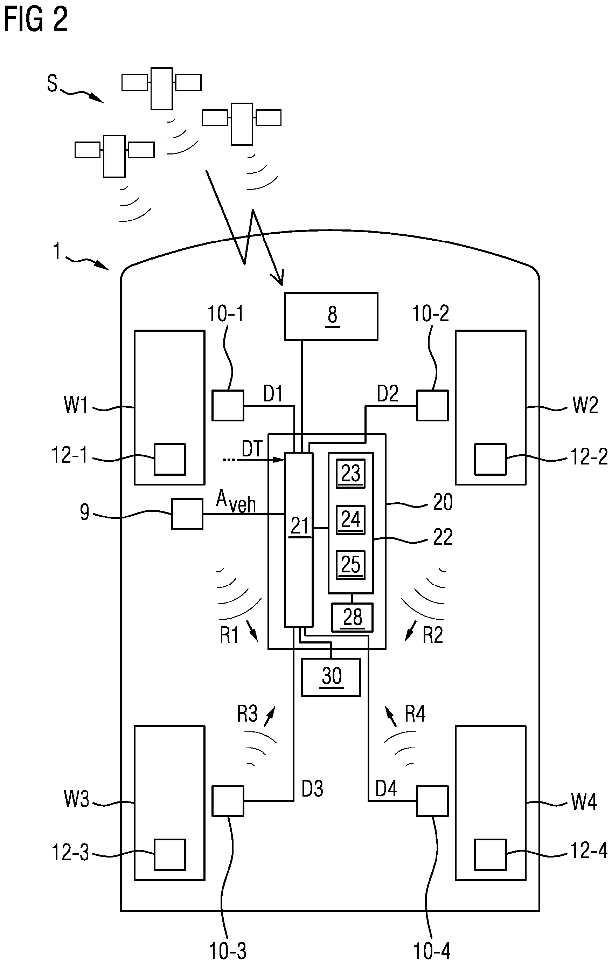

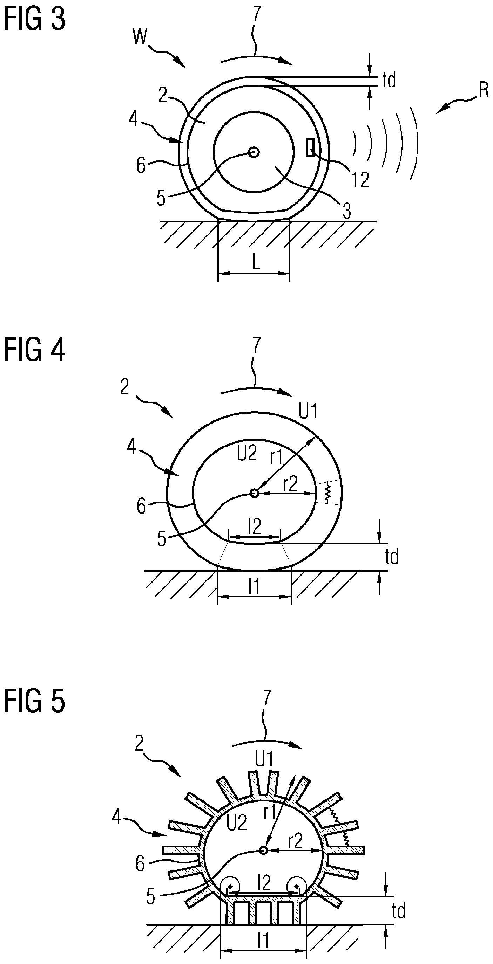

Bevor näher auf weitere Ausgestaltungsmöglichkeiten des erfindungsgemäßen Verfahrens eingegangen wird, sei zunächst mit Bezug auf die Fig. 2 und 3 ein Fahrzeug 1 beschrieben, das mit einem System zur Durchführung des erfindungsgemäßen Verfahrens ausgestattet ist.

Fig. 2 zeigt ein Fahrzeug 1, das in dem dargestellten Beispiel vier Fahrzeugräder W1-W4 aufweist. Das Fahrzeug 1 ist z. B. ein Personenkraftwagen (PKW).

Die Bezugszahlen von in einer Ausführungsform mehrfach vorhandenen, in ihrer Wirkung jedoch gleichen Komponenten (z. B. die Räder W1-W4), sind durchnummeriert und jeweils ergänzt durch einen Bindestrich und eine fortlaufende Zahl. Auf einzelne solcher Komponenten oder auf die Gesamtheit solcher Komponenten wird im Folgenden auch durch die nicht um einen Bindestrich und eine fortlaufende Zahl ergänzte Bezugszahl Bezug genommen.

Fig. 3 zeigt beispielhaft ein Rad W des Fahrzeuges 1 (Fig. 2), bei dem es sich um irgendeines der in Fig. 2 gezeigten Räder W1-W4 handeln kann.

Das Rad W ist von einem luftgefüllten Reifen 2 und einer Felge 3 gebildet, wobei der Reifen 2 ein in Fig. 3 schematisch dargestelltes Profil 4 mit einer Profiltiefe td besitzt.

Während des Betriebs des den Reifen 2 aufweisenden Fahrzeuges 1 dreht sich das Rad W um dessen Radmitte 5. Der Pfeil 7 symbolisiert diese Raddrehung, bei welcher das radial äußere (reifenabgewandte) Ende des Profils 4 auf dem Fahruntergrund abrollt. Das radial innere Ende des Profils 4, also der reifenseitige Ansatz des Profils 4, ist mit der Bezugszahl 6 bezeichnet.

Eine von dem Fahrzeug 1 auf das Rad W und somit den Reifen 2 ausgeübte Reifenlast RL bewirkt eine gewisse Deformation des Reifens 2, bei der wie in Fig. 3 dargestellt zwischen dem Reifen 2 und dem Fahruntergrund eine mehr oder weniger große Reifenaufstandsfläche ausgebildet wird, deren Länge in Fig. 3 mit L bezeichnet ist.

Das Rad W ist ferner mit einer daran angeordneten elektronischen Radeinheit 12 (vgl. elektronische Radeinheiten 12-1 bis 12-4 in Fig. 2) ausgestattet, mittels welcher Radbetriebsparameter des Rades W erfasst und entsprechende Radbetriebsdaten in Form eines von Zeit zu Zeit gesendeten Funksignals R (vgl. Funksignale R1-R4 in Fig. 2) an eine Steuereinrichtung 20 des Fahrzeuges 1 (Fig. 2) übermittelt werden können.

In dem dargestellten Beispiel gemäß Fig. 2 ist mithilfe der elektronischen Radeinheiten 12-1 bis 12-4 ein Reifendruck-überwachungssystem (Tire Pressure Monitoring System, TPMS) des Fahrzeuges 1 ausgebildet. Dementsprechend erfassen die elektronischen Radeinheiten 12-1 bis 12-4 jeweils wenigstens den Reifendruck p des betreffenden Fahrzeugrades der Fahrzeugräder W1-W4 und übermitteln die elektronischen Radeinheiten 12-1 bis 12-4 Radbetriebsdaten enthaltend zumindest eine Information über den Reifendruck p an die Steuereinrichtung 20 des Fahrzeuges 1.

Die elektronischen Radeinheiten 12-1 bis 12-4 besitzen einen identischen Aufbau und sind in dem dargestellten Beispiel an einer Innenseite einer Reifenlauffläche des jeweiligen Reifens 2 angeordnet.

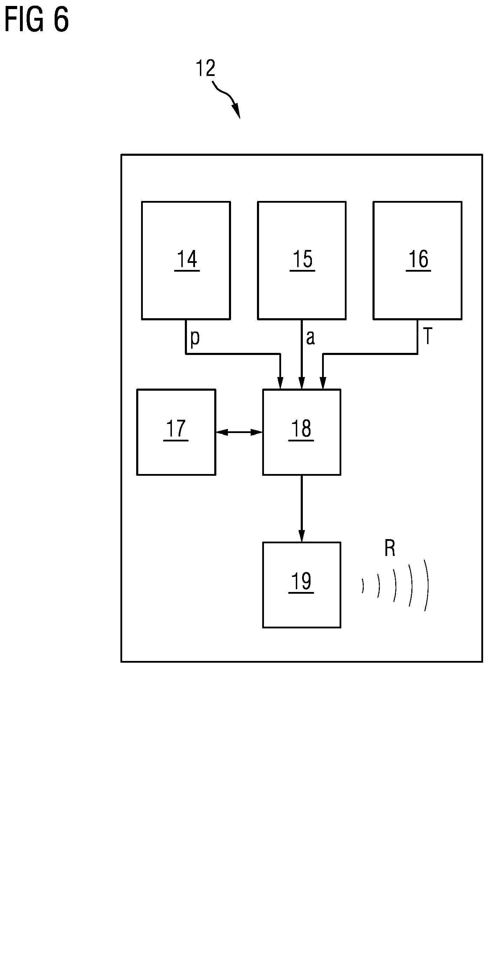

Bezugnehmend auf Fig. 6, die beispielhaft den Aufbau einer solchen elektronischen Radeinheit 12 (vgl. elektronische Radeinheiten 12-1 bis 12-4 in Fig. 2) zeigt, beinhaltet jede der Radeinheiten 12 einen Drucksensor 14 zur Messung des Reifendrucks p und zur Bereitstellung eines den Reifendruck p repräsentierenden Sensorsignals, einen Beschleunigungssensor 15 zur Messung einer Radialbeschleunigung a an der Anbringungsstelle der elektronischen Radeinheit 12 und zur Bereitstellung eines diese Radbeschleunigung a repräsentierenden Sensorsignals und einen Temperatursensor 16 zur Messung einer Reifentemperatur T im Inneren des Reifens 2 und zur Bereitstellung eines diese Reifentemperatur T repräsentierenden Sensorsignals.

Die genannten Sensorsignale werden einer programmgesteuerten Rechnereinheit 18 zur Verarbeitung zugeführt, deren Betrieb durch einen in einer zugeordneten digitalen Speichereinheit 17 gespeicherten Programmcode gesteuert wird.

Die Rechnereinheit 18 erzeugt die zu übermittelnden Radbetriebsdaten, welche in Form der Funksignale R an die fahrzeugseitige Steuereinrichtung 20 gesendet werden.

Die fahrzeugseitige Steuereinrichtung 20 ist hierfür mit einem Funkempfänger 30 zum Empfangen der Funksignale R sämtlicher elektronischer Radeinheiten 12 verbunden.

Die Messung der Radialbeschleunigung a und Bereitstellung des entsprechenden Sensorsignals wird in dem dargestellten Beispiel dazu genutzt, durch eine Auswertung des Sensorsignalverlaufes Werte einer momentanen Drehgeschwindigkeit und/oder Drehstellung des betreffenden Rades W zu ermitteln und entsprechende Information hierüber in die Radbetriebsdaten (Funksignale R) aufzunehmen.

Der Funkempfänger 30 decodiert die empfangenen Datentelegramme und gibt die darin enthaltende Information an eine Empfangseinrichtung 21 der Steuereinrichtung 20 weiter.

Das Fahrzeug 1 ist in der gezeigten Ausführungsform ferner mit einer satellitengestützten Positionsermittlungseinheit in Form einer GPS-Einrichtung 8 ausgestattet, die dazu ausgebildet ist, Positionsdaten betreffend die aktuelle Position des Fahrzeuges 1 zu bestimmen, indem Funksignale von mehreren Satelliten S empfangen und ausgewertet werden. Die GPS-Einrichtung 8 kann eine Komponente eines bei modernen Fahrzeugen oftmals ohnehin vorgesehenen Navigationssystems darstellen und übermittelt die ermittelten Positionsdaten und/oder eine daraus ermittelte Geschwindigkeit v des Fahrzeuges 1 an die Empfangseinrichtung 21 der Steuereinrichtung 20.

Das Fahrzeug 1 ist ferner mit einem Fahrzeugbeschleunigungssensor 9 ausgestattet, der fahrzeugfest angeordnet und dazu ausgebildet ist, eine momentane Beschleunigung $A_{veh}$ des Fahrzeuges 1 zu ermitteln und entsprechende Daten an die Empfangseinrichtung 21 der Steuereinrichtung 20 auszugeben.

Das Fahrzeug 1 ist ferner mit Drehzahlsensoren 10-1 bis 10-4 ausgestattet, die jeweils fahrzeugfest angeordnet und dazu ausgebildet sind, Werte der momentanen Drehgeschwindigkeit und/oder Drehstellung des betreffenden Fahrzeugrades der Fahrzeugräder W1-W4 zu ermitteln und in Form von Drehzahlsensordaten D1, D2, D3 bzw. D4 an die Empfangseinrichtung 21 der Steuereinrichtung 20 auszugeben.

Die Steuereinrichtung 20 weist ferner eine programmgesteuerte Rechnereinheit 22 und eine zugeordnete Speichereinheit 28 auf, wobei in der Speichereinheit 28 insbesondere ein zum Betrieb der Rechnereinheit 22 verwendeter Programmcode gespeichert sein kann.

Die Rechnereinheit 22 der Steuereinrichtung 20 in Verbindung mit dem erwähnten Programmcode in der Speichereinheit 28 realisiert gleichzeitig die in Fig. 2 symbolisch eingezeichneten und hinsichtlich ihrer Funktion nachfolgend beschriebenen Ermittlungseinrichtungen 23, 24 und 25.

Die Funktionsweise der Steuereinrichtung 20 für das Fahrzeug 1 zum Ermitteln der Profiltiefe td des Profils 4 eines Reifens 2 lässt sich wie folgt beschreiben: Die Empfangseinrichtung 21 empfängt die momentane Drehgeschwindigkeit, z. B. die Winkelgeschwindigkeit ω, des den betreffenden Reifen 2 aufweisenden Rades W, die momentane Geschwindigkeit v des Fahrzeuges 1 und zumindest einen Betriebsparameter des Reifens, ausgewählt aus der Gruppe, bestehend aus der momentanen Reifentemperatur T, dem momentanen Reifendruck p und der momentanen Reifenlast RL.

In dem dargestellten Beispiel wird die Drehgeschwindigkeit basierend auf den Drehzahlsensordaten D des betreffenden Drehzahlsensors der Drehzahlsensoren 10-1 bis 10-4 ermittelt. Alternativ oder zusätzlich könnte hierfür auch das betreffende Funksignal R herangezogen werden.

Die momentane Geschwindigkeit v des Fahrzeuges 1 wird basierend auf denjenigen Daten ermittelt, die von der GPS-Einrichtung 8 ermittelt werden.

Zur Ermittlung des zumindest einen ersten Betriebsparameters des Reifens 2 wird in dem dargestellten Beispiel die betreffende elektronische Radeinheit 12 verwendet, die hier insbesondere Daten betreffend die momentane Reifentemperatur T und betreffend den momentanen Reifendruck p liefert. Auch können diese Daten z. B. eine Information über die momentane Reifenlast RL enthalten, was in dem dargestellten Beispiel z. B. dadurch realisiert werden kann, dass z. B. durch eine geeignete Auswertung des von dem Beschleunigungssensor 15 bereitgestellten Sensorsignals zunächst die momentane Länge L der Reifenaufstandsfläche ermittelt wird, um daraus unter Berücksichtigung weiterer Parameter, z.B. insbesondere der Reifentemperatur T und/oder des Reifendrucks p, die Reifenlast RL zu bestimmen.

Abweichend von diesem Ausführungsbeispiel könnte anstelle des Beschleunigungssensors 15 z. B. auch ein Verformungssensor eingesetzt werden, um in entsprechender Weise durch Auswertung des Sensorsignalverlaufes des Verformungssensors die beschriebenen Parameter L und RL zu ermitteln.

Die Empfangseinrichtung 21 empfängt ferner die in diesem Beispiel sämtliche verwendeten drei weiteren ersten Betriebsparameter des Reifens 2, d.h. die momentane Fahrbahnsteigung SL, den momentanen Fahrzeugantriebsmodus DT und die momentane Reifenmaterialdehnung BE.

Die momentane Fahrbahnsteigung SL wird in dem dargestellten Beispiel berechnet basierend auf der mittels des Fahrzeugbeschleunigungssensors 9 des Fahrzeuges 1 gemessenen Fahrzeugbeschleunigung $A_{veh}$ und einer durch Auswertung der Drehgeschwindigkeiten der Räder W1-W4 ermittelten Fahrzeuglängsbeschleunigung, wobei die Drehgeschwindigkeiten aus den Drehzahlsensordaten D1-D4 verwendet werden (hier z. B. die Drehwinkelgeschwindigkeiten $\omega$).

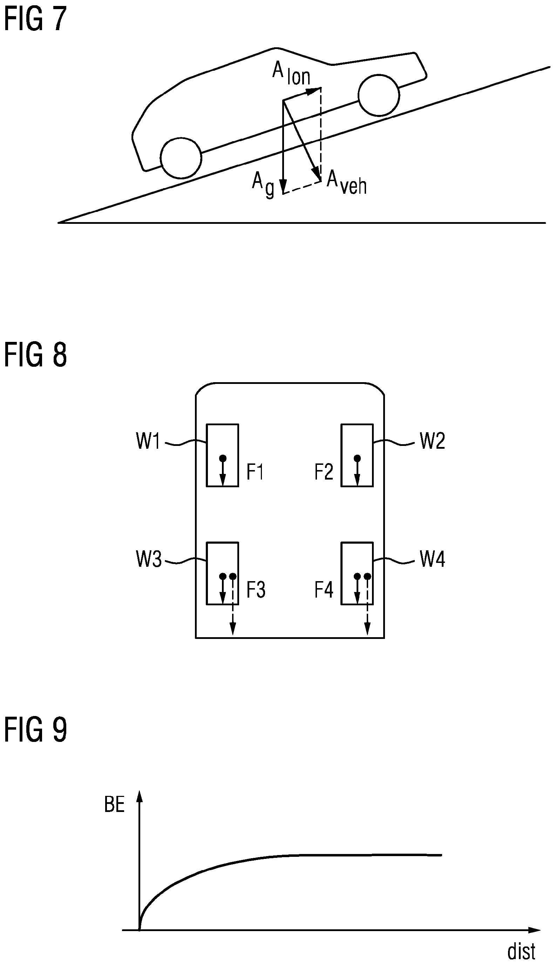

Fig. 7 veranschaulicht beispielhaft eine Situation, in der das Fahrzeug 1 bergauf fährt, wobei SL den in Fahrtrichtung betrachteten Anstiegswinkel darstellt, den es aus den vorerwähnten Fahrzeugbeschleunigungen zu ermitteln gilt. Der Beschleunigungssensor 9 misst die effektive Fahrzeugbeschleunigung $A_{veh}$, die sich als vektorielle Summe der Fahrzeuglängsbeschleunigung $A_{lon}$ und der Erdbeschleunigung $A_g$ ergibt. Demgegenüber ist die anhand der Drehzahlsensordaten D1-D4 ermittelte Fahrzeugbeschleunigung gleich der Fahrzeuglängsbeschleunigung $A_{lon}$, so dass anhand eines vektoriellen Vergleichs von $A_{veh}$ und $A_{lon}$ der Anstiegswinkel SL berechnet werden kann.

Der Fahrzeugantriebsmodus DT wird aus einem anderen (nicht dargestellten) Teil der Fahrzeugelektronik des Fahrzeuges 1 zur Empfangseinrichtung 21 übertragen.

Fig. 8 veranschaulicht beispielhaft zwei unterschiedliche Fahrzeugantriebsmodi anhand der in jedem Modus von den Rädern W1-W4 auf die Fahrbahn ausgeübten Antriebskräfte F1-F4. In Fig. 8 sind mit durchgezogenen Linien diese Kräfte F1-F4 für einen Allradantriebsmodus dargestellt, wohingegen mit gestrichelten Linien Antriebskräfte F3 und F4 in einem Hinterradantriebsmodus eingezeichnet sind.

Wenn während der Fahrt z. B. von dem Hinterradantriebsmodus auf den Allradantriebsmodus umgestellt wird, so führt das z. B. an dem Rad W1 dazu, dass der Schlupf sich vergrößert. Der damit eigentlich bewirkte Einfluss auf das Ergebnis der Profiltiefenermittlung wird jedoch durch die Berücksichtigung von DT bei der Ermittlung von $r2_{dyn}$ korrigiert bzw. zumindest teilweise kompensiert.

Die Reifenmaterialdehnung BE wird in der Steuereinrichtung 20 unter Verwendung der Rechnereinheit 22 anhand einer Modellfunktion ermittelt, wobei die Modellfunktion bzw. diese Modellfunktion bestimmende Funktionsparameter z. B. in der Speichereinheit 28 abgelegt und gegebenenfalls von Zeit zu Zeit aktualisiert werden können.

Fig. 9 zeigt beispielhaft einen typischen Verlauf der momentanen Reifenmaterialdehnung BE in Abhängigkeit von der Laufleistung dist des betreffenden Reifens. Bei normalem Betrieb ergibt sich typischerweise anfangs ein lineares Anwachsen von BE mit steigender Laufleistung dist, wobei die Steigung von BE allmählich abnimmt und zum Ende der Reifenlebensdauer hin sehr klein wird. Mit einer derartigen konvexen Modellfunktion wie beispielhaft in Fig. 9 gezeigt, lässt sich aus einem betreffenden Reifenalter, welches hier als Laufleistung dist definiert ist, die momentane Reifenmaterialdehnung BE bestimmen. Diese Reifenmaterialdehnung BE wird dann als ein Zusatzbeitrag $r2_{dyn,BE}$ aufgrund der Reifenmaterialdehnung bei der Ermittlung des dynamischen Innenradius $r2_{dyn}$ des betreffenden Reifens verwendet.

Die erste Ermittlungseinrichtung 23, welche in der gezeigten Ausführungsform durch eine erste Teilfunktionalität des in der Rechnereinheit 22 ablaufenden Steuerprogramms gebildet ist, ermittelt einen momentanen dynamischen Radradius $r1_{dyn}$ des den betreffenden Reifen 2 aufweisenden Rades W basierend auf der empfangenen momentanen Drehgeschwindigkeit (hier: Winkelgeschwindigkeit $\omega$) und der empfangenen momentanen Geschwindigkeit v des Fahrzeuges 1. Dies erfolgt gemäß der Beziehung $r1_{dyn} = v/\omega$.

Die zweite Ermittlungseinrichtung 24, welche in der gezeigten Ausführungsform durch eine zweite Teilfunktionalität des Steuerprogramms gebildet ist, ermittelt den momentanen dynamischen Innenradius $r2_{dyn}$ des Rades W basierend auf dem zumindest einen empfangenen ersten Betriebsparameter (hier insbesondere z. B. der Reifentemperatur T, dem Reifendruck p und der Reifenlast RL) und ferner basierend auf den weiteren (ersten) Betriebsparametern Fahrbahnsteigung SL, Fahrzeugantriebsmodus DT und Reifenmaterialdehnung BE.

Der dynamische Innenradius $r2_{dyn}$ kann z. B. ermittelt werden, indem vorab, bei einem Reifen mit einer definierten Profiltiefe $td_0$, z. B. einem Neureifen mit Neuprofiltiefe $td_{neu}$, der dynamische Innenradius $r2_{dyn}$ als Differenz des dynamischen Radradius $r1_{dyn}$ und der definierten Profiltiefe $td_0$ (z. B. $td_{neu}$) bestimmt wird ($r2_{dyn}$ = $r1_{dyn}$ - $td_0$) und dieser so z. B. am Anfang des Reifenlebens bestimmte Innenradius $r2_{dyn}$ dann z. B. für den ganzen Rest des Reifenlebens als ein Basiswert in der Steuereinrichtung 20 bzw. deren Speichereinheit 28 abgespeichert wird und bei der Durchführung des Verfahrens von der zweiten Ermittlungseinrichtung 24 basierend auf dem zumindest einen ersten Betriebsparameter und den weiteren (ersten) Betriebsparametern noch korrigiert wird, um den momentanen dynamischen Innenradius $r2_{dyn}$ zu ermitteln.

Die dritte Ermittlungseinrichtung 25, welche in der gezeigten Ausführungsform durch eine dritte Teilfunktionalität des Steuerprogramms gebildet ist, ermittelt die Profiltiefe td des Profils 4 des Reifens 2 basierend zumindest auf den ermittelten Werten $r1_{dyn}$ und $r2_{dyn}$.

Eine weitere Besonderheit der Ermittlungseinrichtung 25 bzw. der Profiltiefenermittlung besteht darin, dass hierbei eine vorab für die Art des betreffenden Reifens 2 ermittelte Korrekturgröße F berücksichtigt wird, die den Zusammenhang zwischen einer Änderung $\Delta td$ der Profiltiefe td einerseits und einer daraus resultierenden Änderung $\Delta (r1_{dyn}-r2_{dyn})$ der Differenz zwischen dem dynamischen Radradius $r1_{dyn}$ und dem dynamischen Innenradius $r2_{dyn}$ andererseits charakterisiert.

Diese Korrekturgröße F, welche nachfolgend noch näher beschrieben wird, ist in dem dargestellten Beispiel in der Speichereinheit 28 der Steuereinrichtung 20 hinterlegt und wurde vorab durch eine Vermessung der betreffenden Art von Reifen auf einem Reifenprüfstand bestimmt.

Im Hinblick auf die Korrekturgröße F werden nachfolgend mit Bezug auf die Fig. 4 und die Fig. 5 zwei Grenzfälle eines mathematisch-physikalischen Modells eines z. B. an dem Fahrzeug 1 von Fig. 2 verbauten Reifens 2 erläutert.

Wenngleich dieses mathematisch-physikalische Modell die Bedeutung und den Vorteil der erfindungsgemäßen Berücksichtigung der Korrekturgröße F zu erklären vermag, so ist das Modell in keiner Weise als Einschränkung der vorliegenden Erfindung zu verstehen, sondern lediglich als ein anschaulicher Erklärungsansatz für den mit der Erfindung erzielten Vorteil.

Die Fig. 4 und die Fig. 5 zeigen in einer der Fig. 3 entsprechenden schematischen Seitenansicht nochmals isoliert jeweils den Reifen 2 in einer Betriebssituation, d. h. auf einem Fahruntergrund abrollend und hierbei durch eine von oben wirkende Radlast RL belastet. Das Profil 4 bzw. dessen Profiltiefe td ist in den Figs. 4 und 5 der besseren Erkennbarkeit halber übertrieben groß dargestellt.

Neben einem geometrischen Radradius r1 und einem geometrischen Innenradius r2, die sich z. B. am unbelasteten Reifen 2 messen lassen, sind außerdem ein Außenumfang U1 am äußeren Profilende und ein Innenumfang U2 am Profilansatz 6 des Reifens 2 eingezeichnet.

Fig. 4 veranschaulicht einen Fall, in dem der Reifen 2 eine nur geringfügige Verformung im Bereich seines Kontakts zum Fahruntergrund und damit eine geringe Reifenaufstandsfläche aufweist. In diesem Fall kann der Reifen 2 demnach im Querschnitt näherungsweise als ein kreisringförmiges Objekt betrachtet werden, bei dem im Kontaktbereich von Reifen 2 und Fahruntergrund befindliche Umfangsabschnitte l1 auf dem Außenumfang U1 und l2 auf dem Innenumfang U1 wie dargestellt unterschiedlich lang sind (l1 > l2).

Fig. 5 zeigt demgegenüber einen Fall, in dem reifenartbedingt der Reifen 2 an der Unterseite im Kontaktbereich von Reifen 2 und Fahruntergrund so stark deformiert ist, dass das Abrollen des Profils 4 Ähnlichkeit mit dem Abrollen der Kette eines Kettenlaufwerks bzw. eines Kettenfahrzeuges (z. B. eines Panzers, einer Planierraupe, eines Schneemobils etc.) besitzt.

Gemäß dieser Panzerketten-Analogie sind in Fig. 5 zwei gedachte Kettenlaufwerk-Laufrollen eingezeichnet, über welche das Profil 4 des Reifens 2 so wie eine Kette eines mit diesen Laufrollen versehenen Kettenlaufwerks läuft.

In diesem Fall sind die im Kontaktbereich zwischen Reifen 2 und Fahruntergrund befindlichen Umfangsabschnitte l1 auf dem Außenumfang U1 und l2 auf dem Innenumfang U2 im Wesentlichen gleich lang. Diese Beschreibung bzw. dieser Grenzfall wird nachfolgend auch als Panzerkettengrenzfall bezeichnet.

An dieser Stelle sei angemerkt, dass insbesondere in Abhängigkeit von der Art des Reifens 2 und konkreten Betriebsparametern des Betriebs des Reifens 2 und des Fahrzeuges 1 Fälle vorstellbar und in der Praxis sogar besonders relevant sind, die gewissermaßen zwischen diesen beiden Grenzfällen gemäß Fig. 4 und Fig. 5 liegen.

Hinsichtlich der dynamischen Radien lässt sich eine Differenz $\Delta r_{dyn}$ bezüglich Messungen am Außenumfang U1 und Innenumfang U2 definieren als $\Delta r_{dyn}$ = l1 - l2.

Für die Ermittlung der Profiltiefe td bzw. einer Änderung $\Delta td$ der Profiltiefe td, aus der die Profiltiefe td leicht bestimmbar ist, sind jedoch die geometrische Radien des Reifens 2 bzw. eine entsprechende Differenz $\Delta r_{geom}$ maßgeblich: $\Delta td = \Delta r_{geom}$, wobei $\Delta r_{geom}$ = r1 - r2, und wobei r1 den geometrischen Radradius und r2 den geometrischen Innenradius des Rades 2 bezeichnen.

Bei der erfindungsgemäßen Profiltiefenermittlung (vgl. Schritt S6 in Fig. 1) kann jedoch vorteilhaft eine Abbildung der aus den ermittelten Werten von $r1_{dyn}$ und $r2_{dyn}$ erhältlichen dynamischen Differenz $\Delta r_{dyn}$ auf die letztlich maßgebliche Differenz $\Delta r_{geom}$ (=$\Delta td$) bewerkstelligt werden.

Im Grenzfall von Fig. 4 ist eine Änderung eines geometrischen Radius direkt mit einer gleich großen Änderung des entsprechenden dynamischen Radius verknüpft, woraus folgt: $\Delta r_{dyn} = \Delta r_{geom}$.

Im Grenzfall von Fig. 5 (Panzerkettengrenzfall) jedoch resultiert aus einer Änderung $\Delta r_{geom}$ bzw. gleich-

bedeutend einer Profiltiefenänderung $\Delta$td keine entsprechende Änderung $\Delta r_{dyn}$ des dynamischen Radius. Es gilt $\Delta r_{dyn} = 0$.

Letzteres erkennt man anschaulich in Fig. 5: Im Panzerkettengrenzfall bewirkt eine Änderung $\Delta$td der Profiltiefe td keine Änderung des Verhältnisses zwischen der Drehgeschwindigkeit (z. B. Winkelgeschwindigkeit $\omega$) des Reifens 2 und der Geschwindigkeit v des Fahrzeuges 1. Vielmehr beeinflusst der Wert der Profiltiefe td in diesem Fall lediglich den vertikalen Abstand zwischen der Radmitte 5 und dem Fahruntergrund, nicht jedoch das genannte Verhältnis.

Basierend auf den obigen Überlegungen kann z. B. gemäß einer besonders einfachen Ausführungsform ein linearer Zusammenhang bzw. eine lineare Abbildung zwischen einem dynamischen Radius bzw. einer Änderung eines dynamischen Radius und dem zugehörigen geometrischen Radius bzw. der Änderung des zugehörigen geometrischen Radius angenommen werden, der sich unter Bezugnahme auf entsprechende Differenzen durch folgende Beziehung ausdrücken lässt:

$$\Delta r_{geom} = F \bullet \Delta r_{dyn}$$

wobei F eine zumindest für die Art des Reifens 2 charakteristische Korrekturkonstante darstellt, die das Verhältnis zwischen der Differenz oder Änderung $\Delta$td der Profiltiefe td einerseits und der entsprechenden Differenz bzw. daraus resultierenden Änderung $\Delta (r1_{dyn}-r2_{dyn})$ andererseits darstellt.

Bei dieser Ausführungsform gilt für den Fall gemäß Fig. 4 demnach F = 1, wohingegen für den Fall gemäß Fig. 5 (Panzerkettengrenzfall) die Korrekturkonstante F divergiert (F = $\infty$).

In diesem Grenzfall (Fig. 5) scheitert theoretisch eine Bestimmung (Berechnung) der geometrischen Profiltiefenänderung $\Delta$td allein aus einer ermittelten Änderung $\Delta (r1_{dyn}-r2_{dyn})$ der dynamischen Radiendifferenz $r1_{dyn}-r2_{dyn}$.

Für die Praxis ist es jedoch vorteilhaft, dass für gängige Reifen 2 das Verhalten eher zwischen den beschriebenen Grenzfällen gemäß der Fig. 4 und der Fig. 5 liegt, so dass bei der erwähnten linearen Abbildung der Grenzfall F = $\infty$ nicht auftritt. Praktikabel ist insofern, bei der linearen Abbildung eine endliche Korrekturkonstante F vorzusehen, die jedoch wesentlich größer als 1 sein kann. In einer Ausführungsform ist die Korrekturkonstante im Bereich von 2 bis 4 liegend gewählt.

Unabhängig davon kann in der Praxis bei der erfindungsgemäßen Profiltiefenermittlung basierend auf dem ermittelten momentanen dynamischen Radradius $r1_{dyn}$ und dem ermittelten momentanen dynamischen Innenradius $r2_{dyn}$ eine Bestimmung der Profiltiefe td vorgesehen sein, bei welcher td nicht ausschließlich in Abhängigkeit von der Differenz $r1_{dyn}-r2_{dyn}$ bestimmt wird, sondern eine oder mehrere weitere Größen der bereits beschriebenen Art, insbesondere Betriebsparameter des betreffenden Reifens 2 und/oder des betreffenden Fahrzeuges 1, berücksichtigt bzw. mitberücksichtigt werden.

So kann z. B. vorgesehen sein, dass die Profiltiefe td, alternativ oder zusätzlich zu der erwähnten Abhängigkeit von der Differenz $r1_{dyn}-r2_{dyn}$, in Abhängigkeit von dem dynamischen Radradius $r1_{dyn}$ und/oder dem dynamischen Innenradius $r2_{dyn}$ bestimmt wird.

Alternativ oder zusätzlich können weitere Größen wie insbesondere z. B. Betriebsparameter des Fahrzeugbetriebes, z. B. die Geschwindigkeit v des Fahrzeuges 1, und/oder Betriebsparameter des Reifenbetriebs, z. B. Reifentemperatur T, Reifendruck p und/oder Reifenlast RL, als Größen vorgesehen sein, von denen das Ergebnis der Profiltiefenermittlung (Schritt S6 in Fig. 1) abhängt.

Als eine Alternative zur Verwendung einer Korrekturkonstante kann als die Korrekturgröße F auch eine zumindest für die Art des Reifens 2 charakteristische Korrekturfunktion F1 zur Abbildung der Differenz $r1_{dyn}-r2_{dyn}$ auf eine Profiltiefenänderung $\Delta$td verwendet werden.

Bei dieser Ausführungsform kann z. B. eine Änderung $\Delta r_{geom}$ des geometrischen Radius und dementsprechend einer geometrischen Änderung $\Delta$td der Profiltiefe td als Wert der Funktion F1 berechnet werden, die zumindest von der Änderung $\Delta r_{dyn}$ des dynamischen Radius abhängt: $\Delta r_{geom} = F1 (\Delta r_{dyn})$.

Eine derartige Abbildungsfunktion F1 lässt sich z. B. mittels einer oder mehrerer Kennlinien in einer Speichereinrichtung des zur Durchführung des erfindungsgemäßen Verfahrens verwendeten Systems hinterlegen, z. B. in Form einer Nachschlagetabelle.

Bezugszeichenliste

| | |
|---|---|
| 1 | Fahrzeug |
| v | Geschwindigkeit des Fahrzeuges |
| W1 bis W4 | Räder des Fahrzeuges |
| $\omega$ | Winkelgeschwindigkeit des Rades |
| 2 | Reifen |
| RL | Reifenlast |
| 3 | Felge |
| L | Länge der Reifenaufstandsfläche |
| 4 | Profil des Reifens |
| td | Profiltiefe |
| 5 | Radmitte |
| 6 | Ansatz des Profils |
| 7 | Raddrehung |
| S | Satelliten |
| 8 | GPS-Einrichtung |
| 9 | Fahrzeugbeschleunigungssensor |
| $A_{veh}$ | Fahrzeugbeschleunigung |
| $A_g$ | Erdbeschleunigung |
| $A_{lon}$ | Fahrzeuglängsbeschleunigung |
| 10-1 bis 10-4 | Drehzahlsensoren |
| D1 bis D4 | Drehzahlsensordaten |

| | |
|---|---|
| 12-1 bis 12-4 | elektronische Radeinheiten |
| R1 bis R4 | Funksignale |
| 14 | Drucksensor |
| p | Druck |
| 15 | Beschleunigungssensor |
| a | Radialbeschleunigung |
| 16 | Temperatursensor |
| T | Reifentemperatur |
| 17 | Speichereinheit |
| 18 | Rechnereinheit |
| 19 | Funksender |
| 20 | Steuereinrichtung |
| 21 | Empfangseinrichtung |
| 22 | Rechnereinheit |
| 23 | erste Ermittlungseinrichtung |
| 24 | zweite Ermittlungseinrichtung |
| 25 | dritte Ermittlungseinrichtung |
| 28 | Speichereinheit |
| 30 | Funkempfänger |
| U1 | Außenumfang |
| l1 | Umfangsabschnitt (auf Außenumfang) |
| r1 | geometrischer Radradius |
| $r1_{dyn}$ | dynamischer Radradius |
| U2 | Innenumfang |
| l2 | Umfangsabschnitt (auf Innenumfang) |
| r2 | geometrischer Innenradius |
| $r2_{dyn}$ | dynamischer Innenradius |
| SL | momentane Fahrbahnsteigung |
| $C_{SL}$ | Koeffizient |
| $r2_{dyn,SL}$ | Zusatzbeitrag aufgrund Fahrbahnsteigung |
| DT | momentaner Fahrzeugantriebsmodus |
| Tq | (zusätzliches) Antriebsmoment des Rades |
| F1 bis F4 | Antriebskräfte |
| $C_{Tq}$ | Koeffizient |
| $r2_{dyn,DT}$ | Zusatzbeitrag aufgrund Fahrzeugantriebsmodus |
| BE | momentane Reifenmaterialdehnung |
| dist | (Kilometer-)Laufleistung des Reifens |
| $r2_{dyn,BE}$ | Zusatzbeitrag aufgrund Reifenmaterialdehnung |

## Patentansprüche

1. Verfahren zum Ermitteln einer Profiltiefe (td) eines Profils (4) eines Reifens (2) während eines Betriebs eines den Reifen (2) aufweisenden Fahrzeuges (1), wobei das Verfahren folgende Schritte aufweist:

    - Ermitteln einer momentanen Drehgeschwindigkeit ($\omega$) eines den Reifen (2) aufweisenden Rades (W) des Fahrzeuges (1) basierend auf von zumindest einem ersten Sensor (10) ermittelten Daten (D),
    - Ermitteln einer momentanen Geschwindigkeit (v) des Fahrzeuges (1) basierend auf von zumindest einem, von dem zumindest einen ersten Sensor (10) verschiedenen zweiten Sensor (8) ermittelten Daten,
    - Ermitteln eines momentanen dynamischen Radradius ($r1_{dyn}$) des den Reifen (2) aufweisenden Rades (W) basierend auf der ermittelten momentanen Drehgeschwindigkeit ($\omega$) und der ermittelten momentanen Geschwindigkeit (v) des Fahrzeuges (1),
    - Ermitteln zumindest eines ersten Betriebsparameters des Reifens (2), ausgewählt aus der Gruppe, bestehend aus einer momentanen Reifentemperatur (T), einem momentanen Reifendruck (p) und einer momentanen Reifenlast (RL),
    - Ermitteln eines momentanen dynamischen Innenradius ($r2_{dyn}$) des Rades (W) basierend auf dem zumindest einen ermittelten ersten Betriebsparameter, wobei der Innenradius des Rades (W) der Abstand zwischen einer Radmitte (5) und einem reifenseitigen Ansatz (6) des Profils (4) ist,
    - Ermitteln einer Profiltiefe (td) des Profils (4) des Reifens (2) basierend auf dem ermittelten momentanen dynamischen Radradius ($r1_{dyn}$) und dem ermittelten momentanen dynamischen Innenradius ($r2_{dyn}$),

**dadurch gekennzeichnet, dass** das Verfahren ferner aufweist:

    Ermitteln wenigstens eines weiteren ersten Betriebsparameters (SL, DT, BE) des Reifens (2), ausgewählt aus der Gruppe, bestehend aus einer momentanen Fahrbahnsteigung (SL), einem momentanen Fahrzeugantriebsmodus (DT) und einer momentanen Reifenmaterialdehnung (BE),
    und dass das Ermitteln des momentanen dynamischen Innenradius ($r2_{dyn}$) ferner basierend auf dem wenigstens einen ermittelten weiteren ersten Betriebsparameter (SL, DT, BE) erfolgt.

2. Verfahren nach Anspruch 1, wobei als weiterer erster Betriebsparameter (SL, DT, BE) die momentane Fahrbahnsteigung (SL) ermittelt wird und wobei im Falle einer Überschreitung eines vorbestimmten Fahrbahnsteigungsschwellwerts durch die ermittelte Fahrbahnsteigung (SL) Ergebnisse der momentan durchgeführten Ermittlung als ungültig verworfen und/oder Ergebnisse darauf basierender Schritte des Verfahrens als ungültig verworfen werden.

3. Verfahren nach Anspruch 1 oder 2, wobei als weiterer erster Betriebsparameter (SL, DT, BE) die momentane Fahrbahnsteigung (SL) ermittelt wird und wobei bei dem Ermitteln des momentanen dynamischen Innenradius ($r2_{dyn}$) eine linear von der ermittelten momentanen Fahrbahnsteigung (SL) abhängige Korrektur erfolgt.

4. Verfahren nach Anspruch 2 oder 3, wobei die momentane Fahrbahnsteigung (SL) basierend auf einer mittels eines Beschleunigungssensors des Fahrzeuges gemessenen Fahrzeugbeschleunigung und einer durch Auswertung wenigstens einer Drehgeschwindigkeit ($\omega$) eines Rades (W) des Fahrzeuges (1) ermittelten Fahrzeuglängsbeschleunigung ermittelt wird.

5. Verfahren nach einem der Ansprüche 1 bis 4, wobei als weiterer erster Betriebsparameter (SL, DT, BE) der momentane Fahrzeugantriebsmodus (DT) ermittelt wird und wobei bei dem Ermitteln des momentanen dynamischen Innenradius ($r2_{dyn}$) eine linear von einem in Abhängigkeit von dem ermittelten momentanen Fahrzeugantriebsmodus (DT) ermittelten Antriebsmoment (Tq) abhängige Korrektur erfolgt.

6. Verfahren nach einem der Ansprüche 1 bis 5, wobei als weiterer erster Betriebsparameter (SL, DT, BE) der momentane Fahrzeugantriebsmodus (DT) ermittelt wird und wobei bei dem Ermitteln des momentanen dynamischen Innenradius ($r2_{dyn}$) eine mittels einer Nachschlagetabelle implementierte Korrektur in Abhängigkeit von dem ermittelten momentanen Fahrzeugantriebsmodus (DT) und der ermittelten momentanen Geschwindigkeit (v) des Fahrzeuges erfolgt.

7. Verfahren nach einem der Ansprüche 1 bis 6, wobei als weiterer erster Betriebsparameter (SL, DT, BE) die momentane Reifenmaterialdehnung (BE) basierend auf einem Reifenalter (dist) des Reifens (2) ermittelt wird und wobei bei dem Ermitteln des momentanen dynamischen Innenradius ($r2_{dyn}$) eine Korrektur in Abhängigkeit von der ermittelten momentanen Reifenmaterialdehnung (BE) erfolgt.

8. Verfahren nach Anspruch 7, wobei die momentane Reifenmaterialdehnung (BE) basierend auf einer vorbestimmten Modellfunktion zur Abbildung des momentanen Reifenalters (dist) des Reifens (2) auf die momentane Reifenmaterialdehnung (BE) ermittelt wird und wobei die Modellfunktion eine konkave Funktion ist.

9. Verfahren nach Anspruch 8, wobei die Modellfunktion vorbestimmt wird in Abhängigkeit von Reifeninformationsdaten des Reifens (2).

10. Verfahren nach einem der Ansprüche 7 bis 9, wobei in einer ersten Phase unmittelbar nach Installation eines neuen Reifens (2) das Ermitteln der Profiltiefe (td) basierend auf dem momentanen Reifenalter (dist) des Reifens (2) erfolgt, wobei in einer zweiten Phase ein Anlernen eines Einflusses der Geschwindigkeit (v) des Fahrzeuges auf den momentanen dynamischen Radradius ($r1_{dyn}$) erfolgt und wobei in einer sich daran anschließenden dritten Phase das Ermitteln der Profiltiefe (td) basierend auf dem ermittelten momentanen dynamischen Radradius ($r1_{dyn}$) und dem ermittelten momentanen dynamischen Innenradius ($r2_{dyn}$) erfolgt.

11. Verfahren nach Anspruch 10, wobei in der zweiten Phase ferner die Modellfunktion bestimmt wird durch eine Auswertung der in der ersten Phase und der zweiten Phase ermittelten Größen.

12. Verfahren nach einem der Ansprüche 1 bis 11, wobei das Ermitteln der Profiltiefe (td) unter Berücksichtigung einer vorab für die Art des Reifens (2) ermittelten Korrekturgröße (F) erfolgt, wobei die Korrekturgröße (F) den Zusammenhang zwischen einer Änderung der Profiltiefe (td) und einer daraus resultierenden Änderung der Differenz zwischen dem dynamischen Radradius ($r1_{dyn}$) und dem dynamischen Innenradius ($r2_{dyn}$) charakterisiert, wobei als die Korrekturgröße (F) eine für die Art des Reifens (2) charakteristische Kor-rekturkonstante verwendet wird, die das Verhältnis zwischen der Änderung der Profiltiefe (td) und der daraus resultierenden Änderung der Differenz zwischen dem dynamischen Radradius ($r1_{dyn}$) und dem dynamischen Innenradius ($r2_{dyn}$) darstellt, oder wobei als die Korrekturgröße (F) eine für die Art des Reifens (2) charakteristische Korrekturfunktion (F1) zur Abbildung einer Differenz zwischen dem dynamischen Radradius ($r1_{dyn}$) und dem dynamischen Innenradius ($r2_{dyn}$) auf eine Änderung der Profiltiefe (td) verwendet wird.

13. Verfahren nach einem der vorangehenden Ansprüche, wobei zudem zumindest ein zweiter Betriebsparameter ermittelt wird, ausgewählt aus der Gruppe, bestehend aus einer momentanen Beschleunigung des Fahrzeuges (1), einer momentanen Gierrate des Fahrzeuges (1), einem momentanen Lenkwinkel, einem momentanen Drehmoment eines Antriebsmotors des Fahrzeuges (1) und einem Betriebszustand einer Bremsvorrichtung des Fahrzeuges (1), und wobei das Ermitteln der Profiltiefe (td) zudem in Abhängigkeit des zumindest einen ermittelten zweiten Betriebsparameters erfolgt.

14. Steuereinrichtung (20) für ein Fahrzeug (1) zum Ermitteln einer Profiltiefe (td) eines Profils (4) eines Reifens (2) des Fahrzeuges (1), aufweisend

- eine Empfangseinrichtung (21), ausgebildet zum Empfangen einer momentanen Drehgeschwindigkeit ($\omega$) eines den Reifen (2) aufweisenden Rades (W) des Fahrzeuges (1), einer momentanen Geschwindigkeit (v) des Fahrzeuges (1) und zumindest eines ersten Betriebsparameters des Reifens (2), ausgewählt aus der Gruppe, bestehend aus einer momentanen Reifentemperatur (T), einem momentanen Reifendruck (p) und einer momentanen Reifenlast (RL),

- eine erste Ermittlungseinrichtung (23), ausgebildet zum Ermitteln eines momentanen dynamischen Radradius ($r1_{dyn}$) des den Reifen (2) aufweisenden Rades (W) basierend auf der empfangenen momentanen Drehgeschwindigkeit ($\omega$) und der empfangenen momentanen Geschwindigkeit (v) des Fahrzeuges (1),

- eine zweite Ermittlungseinrichtung (24), ausgebildet zum Ermitteln eines momentanen dynamischen Innenradius ($r2_{dyn}$) des Rades (W) basierend auf dem zumindest einen empfangenen ersten Betriebsparameter, wobei der Innenradius des Rades (W) der Abstand zwischen einer Radmitte (5) und einem reifenseitigen Ansatz (6) des Profils (4) ist, und

- eine dritte Ermittlungseinrichtung (25), ausgebildet zum Ermitteln einer Profiltiefe (td) des Profils (4) des Reifens (2) basierend auf dem ermittelten momentanen dynamischen Radradius ($r1_{dyn}$) und dem ermittelten momentanen dynamischen Innenradius ($r2_{dyn}$),

**dadurch gekennzeichnet, dass** die Empfangseinrichtung (21) ferner dazu ausgebildet ist, wenigstens einen weiteren ersten Betriebsparameter (SL, DT, BE) des Reifens (2) zu empfangen, ausgewählt aus der Gruppe, bestehend aus einer momentanen Fahrbahnsteigung (SL), einem momentanen Fahrzeugantriebsmodus (DT) und einer momentanen Reifenmaterialdehnung (BE),

und dass die zweite Ermittlungseinrichtung (24) ferner dazu ausgebildet ist, den momentanen dynamischen Innenradius ($r2_{dyn}$) zudem basierend auf dem wenigstens einen ermittelten weiteren ersten Betriebsparameter (SL, DT, BE) zu ermitteln.

15. System für ein Fahrzeug (1) zum Ermitteln einer Profiltiefe (td) eines Profils (4) eines Reifens (2) des Fahrzeuges (1), aufweisend ein Steuereinrichtung (20) nach Anspruch 14 und zumindest eine elektronische Radeinheit (12), wobei die zumindest eine elektronische Radeinheit (12) in dem Reifen (2) anordenbar ist und zumindest einen Sensor (14, 15, 16) aufweist, ausgewählt aus der Gruppe bestehend aus einem Temperatursensor (16), einem Drucksensor (14), einem Beschleunigungssensor (15) und einem Verformungssensor.

**Claims**

1. Method for determining a tread depth (td) of a tread (4) of a tyre (2) during operation of a vehicle (1) having the tyre (2), wherein the method comprises the following steps:

- determining an instantaneous rotational speed ($\omega$) of a wheel (W), having the tyre (2), of the vehicle (1) based on data (D) determined by at least one first sensor (10),
- determining an instantaneous speed (v) of the vehicle (1) based on data determined by at least one second sensor (8) which is different from the at least one first sensor (10),
- determining an instantaneous dynamic wheel radius ($r1_{dyn}$) of the wheel (W) having the tyre (2) based on the determined instantaneous rotational speed ($\omega$) and the determined instantaneous speed (v) of the vehicle (1),
- determining at least one first operating parameter of the tyre (2), selected from the group consisting of an instantaneous tyre temperature (T), an instantaneous tyre pressure (p) and an instantaneous tyre load (RL),
- determining an instantaneous dynamic inside radius ($r2_{dyn}$) of the wheel (W) based on the at least one determined first operating parameter, wherein the inside radius of the wheel (W) is the distance between a wheel centre (5) and a tyre-side start (6) of the tread (4),
- determining a tread depth (td) of the tread (4) of the tyre (2) based on the determined instantaneous dynamic wheel radius ($r1_{dyn}$) and the determined instantaneous dynamic inside radius ($r2_{dyn}$), **characterized in that** the method further comprises:
- determining at least one further first operating parameter (SL, DT, BE) of the tyre (2), selected from the group consisting of an instantaneous roadway gradient (SL), an instantaneous vehicle drive mode (DT) and an instantaneous tyre material expansion (BE),

and **in that** the instantaneous dynamic inside radius ($r2_{dyn}$) is further determined based on the at least one determined further first operating parameter (SL, DT, BE).

2. Method according to Claim 1, wherein the instantaneous roadway gradient (SL) is determined as a further first operating parameter (SL, DT, BE), and wherein results of the instantaneously carried out determination are rejected as invalid and/or results of steps of the method based thereon are rejected as invalid in the event of the determined roadway gradient (SL) exceeding a predetermined roadway gradient threshold value.

3. Method according to Claim 1 or 2, wherein the instantaneous roadway gradient (SL) is determined as a further first operating parameter (SL, DT, BE), and wherein a correction which is linearly dependent on the determined instantaneous roadway gradient (SL) is made when determining the instantaneous dynamic inside radius ($r2_{dyn}$).

4. Method according to Claim 2 or 3, wherein the instantaneous roadway gradient (SL) is determined based on a vehicle acceleration measured by means of an acceleration sensor of the vehicle and on a vehicle longitudinal acceleration determined by evaluating at least one rotational speed ($\omega$) of a wheel (W) of the vehicle (1).

5. Method according to one of Claims 1 to 4, wherein the instantaneous vehicle drive mode (DT) is determined as a further first operating parameter (SL, DT, BE), and wherein a correction which is linearly dependent on a drive torque (Tq) determined depending on the determined instantaneous vehicle drive mode (DT) is made when determining the instantaneous dynamic inside radius ($r2_{dyn}$).

6. Method according to one of Claims 1 to 5, wherein the instantaneous vehicle drive mode (DT) is determined as a further first operating parameter (SL, DT, BE), and wherein a correction implemented by means of a lookup table is made depending on the determined instantaneous vehicle drive mode (DT) and the determined instantaneous speed (v) of the vehicle when determining the instantaneous dynamic inside radius ($r2_{dyn}$).

7. Method according to one of Claims 1 to 6, wherein the instantaneous tyre material expansion (BE) is determined based on a tyre age (dist) of the tyre (2) as a further first operating parameter (SL, DT, BE), and wherein a correction is made depending on the determined instantaneous tyre material expansion (BE) when determining the instantaneous dynamic inside radius ($r2_{dyn}$).

8. Method according to Claim 7, wherein the instantaneous tyre material expansion (BE) is determined based on a predetermined model function for mapping the instantaneous tyre age (dist) of the tyre (2) onto the instantaneous tyre material expansion (BE), and wherein the model function is a concave function.

9. Method according to Claim 8, wherein the model function is predetermined depending on tyre information data about the tyre (2).

10. Method according to one of Claims 7 to 9, wherein the tread depth (td) is determined based on the instantaneous tyre age (dist) of the tyre (2) in a first phase immediately after installation of a new tyre (2), wherein an influence of the speed (v) of the vehicle on the instantaneous dynamic wheel radius ($r1_{dyn}$) is learnt in a second phase, and wherein the tread depth (td) is determined based on the determined instantaneous dynamic wheel radius ($r1_{dyn}$) and the determined instantaneous dynamic inside radius ($r2_{dyn}$) in a third phase following said second phase.

11. Method according to Claim 10, wherein the model function is further determined in the second phase by evaluating the variables determined in the first phase and the second phase.

12. Method according to one of Claims 1 to 11, wherein the tread depth (td) is determined taking into consideration a correction variable (F) determined beforehand for the type of tyre (2), wherein the correction variable (F) characterizes the relationship between a change in the tread depth (td) and a change resulting therefrom in the difference between the dynamic wheel radius ($r1_{dyn}$) and the dynamic inside radius ($r2_{dyn}$), wherein a correction constant characteristic of the type of tyre (2) is used as the correction variable (F), which correction constant represents the relationship between the change in the tread depth (td) and the change resulting therefrom in the difference between the dynamic wheel radius ($r1_{dyn}$) and the dynamic inside radius ($r2_{dyn}$), or wherein a correction function (F1), characteristic of the type of tyre (2), for mapping a difference between the dynamic wheel radius ($r1_{dyn}$) and the dynamic inside radius ($r2_{dyn}$) onto a change in the tread depth (td) is used as the correction variable (F).

13. Method according to one of the preceding claims, wherein at least one second operating parameter is additionally determined, which second operating parameter is selected from the group consisting of an instantaneous acceleration of the vehicle (1), an instantaneous yaw rate of the vehicle (1), an instantaneous steering angle, an instantaneous torque of a drive motor of the vehicle (1) and an operating state of a braking device of the vehicle (1), and wherein the tread depth (td) is additionally determined depending on the at least one determined second operating parameter.

14. Control device (20) for a vehicle (1) for determining a tread depth (td) of a tread (4) of a tyre (2) of the vehicle (1), having

- a reception device (21), designed to receive an instantaneous rotational speed ($\omega$) of a wheel (W), having the tyre (2), of the vehicle (1), an instantaneous speed (v) of the vehicle (1) and at least one first operating parameter of the tyre (2), selected from the group consisting of an instantaneous tyre temperature (T), an instantaneous tyre pressure (p) and an instantaneous tyre load (RL),

- a first determination device (23), designed to determine an instantaneous dynamic wheel radius ($r1_{dyn}$) of the wheel (W) having the tyre (2) based on the received instantaneous rotational speed ($\omega$) and the received instantaneous speed (v) of the vehicle (1),

- a second determination device (24), designed to determine an instantaneous dynamic inside radius ($r2_{dyn}$) of the wheel (W) based on the at least one received first operating parameter, wherein the inside radius of the wheel (W) is the distance between a wheel centre (5) and a tyre-side start (6) of the tread (4), and

- a third determination device (25), designed to determine a tread depth (td) of the tread (4) of the tyre (2) based on the determined instantaneous dynamic wheel radius ($r1_{dyn}$) and the determined instantaneous dynamic inside radius ($r2_{dyn}$),

**characterized in that** the reception device (21) is further designed to receive at least one further first operating parameter (SL, DT, BE) of the tyre (2), selected from the group consisting of an instantaneous roadway gradient (SL), an instantaneous vehicle drive mode (DT) and an instantaneous tyre material expansion (BE),

and **in that** the second determination device (24) is further designed to determine the instantaneous dynamic inside radius ($r2_{dyn}$) additionally based on the at least one determined further first operating parameter (SL, DT, BE) .

15. System for a vehicle (1) for determining a tread depth (td) of a tread (4) of a tyre (2) of the vehicle (1), having a control device (20) according to Claim 14 and at least one electronic wheel unit (12), wherein the at least one electronic wheel unit (12) can be arranged in the tyre (2) and has at least one sensor (14, 15, 16) selected from the group consisting of a temperature sensor (16), a pressure sensor (14), an acceleration sensor (15) and a deformation sensor.

## Revendications

1. Procédé de détermination d'une profondeur (td) d'une sculpture (4) d'un pneumatique (2) pendant le fonctionnement d'un véhicule (1) comportant le pneumatique (2), le procédé comportant les étapes suivantes :

- déterminer une vitesse de rotation instantanée ($\omega$) d'une roue (W) du véhicule (1) qui est pourvue du pneumatique (2), sur la base de données (D) déterminées par au moins un premier capteur (10),

- déterminer une vitesse instantanée (v) du véhicule (1) sur la base au moins de données déterminées par au moins un deuxième capteur (8) différent de l'au moins un premier capteur (10),

- déterminer un rayon dynamique instantané ($r1_{dyn}$) de la roue (W), qui est pourvue du pneumatique (2), sur la base de la vitesse de rotation instantanée déterminée ($\omega$) et de la vitesse instantanée déterminée (v) du véhicule (1),

- déterminer au moins un premier paramètre de fonctionnement du pneumatique (2), choisi dans le groupe comprenant une température de pneumatique instantanée (T), une pression de pneumatique instantanée (p) et une charge de pneumatique instantanée (RL),

- déterminer un rayon intérieur dynamique instantané ($r2_{dyn}$) de la roue (W) sur la base de l'au moins un premier paramètre de fonctionnement déterminé, le rayon intérieur de la roue (W) étant la distance entre un centre de roue (5) et une extension côté pneumatique (6) de la sculpture (4),

- déterminer une profondeur (td) de la sculpture (4) du pneumatique (2) sur la base du rayon de roue dynamique instantané déterminé ($r1_{dyn}$) et du rayon intérieur dynamique instantané déterminé ($r2_{dyn}$),

**caractérisé en ce que** le procédé comprend en outre l'étape suivante :

déterminer au moins un autre premier paramètre de fonctionnement (SL, DT, BE) du pneumatique (2), choisi dans le groupe comprenant une pente de chaussée instantanée (SL), un mode d'entraînement de véhicule instantané (DT) et une dilatation de matériau de pneumatique instantanée (BE),

et **en ce que** le rayon intérieur dynamique instantané ($r2_{dyn}$) est également déterminé sur la base de l'au moins un autre premier paramètre de fonctionnement déterminé (SL, DT, BE).

2. Procédé selon la revendication 1, la pente de chaussée instantanée (SL) étant déterminée comme autre premier paramètre de fonctionnement (SL, DT, BE) et, dans le cas où la pente de chaussée déterminée (SL) devient supérieure à une valeur de seuil de pente de chaussée prédéterminée, les résultats de la détermination effectuée de manière instantanée étant rejetés comme invalides et/ou les résultats d'étapes du procédé, basées sur celle-ci, étant rejetés comme invalides.

3. Procédé selon la revendication 1 ou 2, la pente de chaussée instantanée (SL) étant déterminée comme autre premier paramètre de fonctionnement (SL, DT, BE) et une correction, dépendant linéairement de la pente de chaussée instantanée déterminée (SL) étant effectuée lors de la détermination du rayon intérieur dynamique instantané ($r2_{dyn}$).

4. Procédé selon la revendication 2 ou 3, la pente de chaussée instantanée (SL) étant déterminée sur la base d'une accélération du véhicule, mesurée au moyen d'un capteur d'accélération du véhicule, et d'une accélération longitudinale du véhicule déterminée par évaluation d'au moins une vitesse de rotation ($\omega$) d'une roue (W) du véhicule (1).

5. Procédé selon l'une des revendications 1 à 4, le mode d'entraînement de véhicule instantané (DT) étant déterminé comme autre premier paramètre de fonctionnement (SL, DT, BE) et une correction, dépendant linéairement d'un couple d'entraînement (Tq) déterminé en fonction du mode d'entraînement de véhicule instantané déterminé (DT) étant effectuée lors de la détermination du rayon intérieur dynamique instantané ($r2_{dyn}$).

6. Procédé selon l'une des revendications 1 à 5, le mode d'entraînement de véhicule instantané (DT) étant déterminé comme autre premier paramètre de fonctionnement (SL, DT, BE) et, lors de la détermination du rayon intérieur dynamique instantané ($r2_{dyn}$), une correction, mise en œuvre au moyen d'une table de correspondance, étant effectuée en fonction du mode d'entraînement de véhicule instantané déterminé (DT) et de la vitesse instantanée déterminée (v) du véhicule.

7. Procédé selon l'une des revendications 1 à 6, la dilatation de matériau de pneumatique instantanée (BE) étant déterminée comme autre premier paramètre de fonctionnement (SL, DT, BE) sur la base d'un vieillissement (dist) du pneumatique (2) et, lors de la détermination du rayon intérieur dynamique instantané ($r2_{dyn}$), une correction étant effectuée en fonction de la dilatation de matériau de pneumatique instantané déterminé (BE).

8. Procédé selon la revendication 7, la dilatation de matériau de pneumatique instantanée (BE) étant déterminée sur la base d'une fonction modèle prédéterminée qui représente la dilatation de matériau de pneumatique instantanée (BE) en fonction du vieillissement instantané (dist) du pneumatique (2) et la fonction modèle étant une fonction concave.

9. Procédé selon la revendication 8, la fonction modèle étant prédéterminée en fonction de données d'informations du pneumatique (2).

10. Procédé selon l'une des revendications 7 à 9, la profondeur de sculpture (td) étant déterminée sur la base du vieillissement instantané (dist) du pneumatique (2) dans une première phase immédiatement après l'installation d'un nouveau pneumatique (2), l'apprentissage de l'influence de la vitesse (v) du véhicule sur le rayon de roue dynamique instantané ($r1_{dyn}$) étant effectué dans une deuxième phase et la détermination de la profondeur de sculpture (td) sur la base du rayon de roue dynamique instantané déterminé ($r1_{dyn}$) et du rayon intérieur dynamique instantané déterminé ($r2_{dyn}$) étant effectuée dans une troisième phase suivante.

11. Procédé selon la revendication 10, la fonction modèle étant également déterminée dans la deuxième phase par évaluation des grandeurs déterminées dans la première phase et la deuxième phase.

12. Procédé selon l'une des revendications 1 à 11, la profondeur de sculpture (td) étant déterminée avec prise en compte d'une grandeur de correction (F) déterminée à l'avance pour le type de pneumatique (2), la grandeur de correction (F) caractérisant la relation entre une variation de la profondeur de sculpture (td) et une variation résultante de la différence entre le rayon de roue dynamique ($r1_{dyn}$) et le rayon intérieur dynamique ($r2_{dyn}$), une constante de correction caractéristique du type de pneumatique (2) étant utilisée comme grandeur de correction (F), laquelle constante est le rapport entre la variation de la profondeur de sculpture (td) et la variation résultante de la différence entre le rayon de roue dynamique ($r1_{dyn}$) et le rayon intérieur dynamique ($r2_{dyn}$), ou la fonction de correction (F1) caractéristique du type de pneumatique (2) étant utilisée comme grandeur de correction (F) pour représenter une variation de la profondeur de sculpture (td) en fonction d'une différence entre le rayon de roue dynamique ($r1_{dyn}$) et le rayon intérieur dynamique ($r2_{dyn}$).

13. Procédé selon l'une des revendications précédentes, au moins un deuxième paramètre de fonctionnement étant également déterminé qui est choisi dans le groupe comprenant une accélération instantanée du véhicule (1), un taux de lacet instantané du véhicule (1), un angle de braquage instantané, un couple instantané d'un moteur d'entraînement du véhicule (1) et un état de fonctionnement d'un dispositif de freinage du véhicule (1) et la détermination de la profondeur de sculpture (td) étant également effectuée en fonction de l'au moins un deuxième paramètre de fonctionnement déterminé.

14. Organe de commande (20) destiné à un véhicule (1) pour déterminer une profondeur (td) d'une sculpture (4) d'un pneumatique (2) du véhicule (1), ledit organe comportant

- un organe de réception (21) conçu pour recevoir une vitesse de rotation instantanée ($\omega$) d'une roue (W) du véhicule (1) qui est pourvue du pneumatique (2), une vitesse instantanée (v) du véhicule (1) et au moins un premier paramètre de fonctionnement du pneumatique (2) choisi dans le groupe comprenant une température de pneumatique instantanée (T), une pression de pneumatique instantanée (p) et une charge de pneumatique instantanée (RL),
- un premier organe de détermination (23) conçu pour déterminer un rayon dynamique instantané ($r1_{dyn}$) de la roue (W) pourvue du pneumatique (2) sur la base de la vitesse de rotation instantanée reçue ($\omega$) et de la vitesse instantanée reçue (v) du véhicule (1),
- un deuxième organe de détermination (24) conçu pour déterminer un rayon intérieur dynamique instantané ($r2_{dyn}$) de la roue (W) en fonction de l'au moins un premier paramètre de fonctionnement reçu, le rayon intérieur de la roue (W) étant la distance entre un centre de roue (5) et une extension côté pneumatique (6) de la sculpture (4), et
- un troisième organe de détermination (25) conçu pour déterminer une profondeur (td) de la sculpture (4) du pneumatique (2) en fonction du rayon de roue dynamique instantané déterminé ($r1_{dyn}$) et du rayon intérieur dynamique instantané déterminé ($r2_{dyn}$),

**caractérisé en ce que** l'organe de réception (21) est en outre conçu pour recevoir au moins un autre premier paramètre de fonctionnement (SL, DT, BE) du pneumatique (2) choisi dans le groupe comprenant une pente de chaussée instantanée (SL), un mode d'entraînement de véhicule instantané (DT) et une dilatation de matériau de pneumatique instantanée (BE),
et **en ce que** le deuxième organe de détermination (24) est également conçu pour déterminer le rayon intérieur dynamique instantané ($r2_{dyn}$) sur la base de l'au moins un autre premier paramètre de fonctionnement déterminé (SL, DT, BE).

15. Système destiné à un véhicule (1) pour déterminer une profondeur (td) d'une sculpture (4) d'un pneumatique (2) du véhicule (1), ledit système comprenant un organe de commande (20) selon la revendication 14 et au moins une unité de roue électronique (12), l'au moins une unité de roue électronique (12) pouvant être disposée dans le pneumatique (2), et comportant au moins un capteur (14, 15, 16) choisi dans le groupe comprenant un capteur de température (16), un capteur de pression (14), un capteur d'accélération (15) et un capteur de déformation.

FIG 1

# FIG 2

EP 3 717 283 B1

FIG 3

W    7    td    R

2
4
6
5    12
3
L

FIG 4

2    U1
4    U2  r1
6    r2
5    l2    td
l1

FIG 5

2    U1
4    U2  r1
6    r2
5    l2    td
l1

25

# FIG 6

EP 3 717 283 B1

FIG 7

FIG 8

FIG 9

27

**IN DER BESCHREIBUNG AUFGEFÜHRTE DOKUMENTE**

**In der Beschreibung aufgeführte Patentdokumente**

- DE 102012217901 B3

- DE 10058099 A1